# EUROPEAN PATENT APPLICATION

(11) **EP 4 763 484 A1**
(43) Date of publication of application: **24.06.2026**
(21) Application number: 25221693.2
(22) Date of filing: 09.12.2025
(51) Int. Cl.: B29C 65/18, B29C 65/30

(54) **PORTABLE CONDUCTION WELDING APPARATUS, SYSTEM, AND METHOD FOR CONDUCTION WELDING OF THERMOPLASTIC COMPOSITE PARTS**

(30) Priority: 20.12.2024 US 202418990974
(71) Applicant: The Boeing Company, Arlington, VA 22202 (US)
(72) Inventor: Werntges, Paul G., Arlington, VA, 22202 (US); Raines, David, Arlington, VA, 22202 (US); O'Connell, Kelly C., Arlington, VA, 22202 (US); Arnold, Alice R., Arlington, VA, 22202 (US); Hartley, Meredith A., Arlington, VA, 22202 (US)
(74) Representative: Hoffmann Eitle

(57) **Abstract**

There is provided a portable conduction welding apparatus (10) for conduction welding (22) of thermoplastic composite parts (24). The apparatus (10) has a heating system (46) with a first heater assembly (50) and a second heater assembly (52) each having a machined insulation block (56), a machined heater block (58), heater element(s) (74), and a thermocouple (96). The apparatus (10) has a force application and monitoring system (102) with a clamp assembly (104) and a load cell (160). The apparatus (10) has an indexing assembly (166) to index the first heater assembly (50) and the second heater assembly (52) to the clamp assembly (104). The apparatus (10) has one or more controllers (85) having one or more power supplies (86). The apparatus (10) is portable and is configured to weld together at a weldline (28a), a first thermoplastic composite part (24a) aligned to the first heater assembly (50) and a second thermoplastic composite part (24b) aligned to the second heater assembly (52), by applying force (162) and conducting heat (30) at the weldline (28a) during a thermal welding cycle (75).

## Description

### FIELD

The present disclosure relates generally to conduction welding apparatuses, systems, and methods, and more particularly, to portable conduction welding apparatuses, systems, and methods for conduction welding of thermoplastic composite parts, such as an aircraft thermoplastic composite parts.

### BACKGROUND

The joining of thermoplastic composite parts by welding, such as thermoplastic welding, is increasingly used in the manufacture and repair of thermoplastic composite parts for aircraft, spacecraft, rotorcraft, automobiles, watercraft, and other vehicles and structures, to reduce weight and cost of assembled parts from mechanical fastening procedures, and to reduce processing times from adhesive bonding procedures. In addition, unlike thermoset composites that require complex polymer crosslinking reactions and long cure times in an autoclave, oven, or press, thermoplastic composites can be melted and remelted to fuse polymers together without such complex polymer crosslinking reactions and long cure times.

The thermoplastic welding of two thermoplastic composite parts is carried out by melting and fusing thermoplastic composite material at contact interfaces of the two thermoplastic composite parts, typically referred to as a weldline or bondline, with application of heat and pressure, followed by cooling. Known thermoplastic welding techniques may typically include induction welding, ultrasonic welding, laser welding, resistance welding, and conduction welding. However, known thermoplastic welding techniques typically involve the use of robotics and large equipment that require digital controls and software programming to pre-plan a pathway of a robot and/or a pathway of the equipment, such as a jig.

For example, one known thermoplastic welding system and process includes induction welding that uses electromagnetic induction to heat the thermoplastic composite parts by moving an induction coil along the weldline or bondline, and that uses a floor-mounted robot with an end effector that must travel along a pre-determined path along a weldline or bondline of the thermoplastic composite parts using a pre-determined speed, distance, and induction current intensity. However, such known thermoplastic welding system and process is not portable, may not have usability on multiple thermoplastic composite part configurations, is expensive, and is complex to program and control.

Another known thermoplastic welding system and process includes conduction welding that uses large heated platens mounted to robots to conduct heat through the thermoplastic composite parts to be joined. However, such known thermoplastic welding process is not portable, may not have usability on multiple thermoplastic composite part configurations, and is expensive.

Accordingly, there is a need in the art for an improved thermoplastic welding apparatus, system, and method, such as a conduction welding apparatus, system, and method for conduction welding of thermoplastic composite parts that is portable for transport to, and use at, multiple locations, including a manufacturing facility and on an aircraft or on other vehicles, that is usable on multiple thermoplastic composite part configurations, that is simple to use and does not require complex digital controls and software programming and robotics to pre-plan the pathway of a robot or large equipment, that does not require special facility modifications, such as power or air supplies, to use, that is easy to carry, is handheld, and is lightweight, that is less expensive than robotics and large equipment, such as jigs and large heated platens, that is adaptable, and that provide advantages over known systems and methods.

### SUMMARY

Example implementations of the present disclosure provide for an improved portable conduction welding apparatus, system, and method for conduction welding of thermoplastic composite parts. As discussed in the below detailed description, versions of the improved portable conduction welding apparatus, system, and method may provide significant advantages over known apparatuses, systems, and methods.

In a version of the disclosure, there is provided a portable conduction welding apparatus for conduction welding of thermoplastic composite parts. The portable conduction welding apparatus comprises a heating system. The heating system comprises a first heater assembly, and a second heater assembly positioned opposite the first heater assembly. Each of the first heater assembly and the second heater assembly comprises a machined insulation block, a machined heater block positioned within the machined insulation block, one or more heater elements coupled to the machined heater block, and a thermocouple coupled to the machined heater block. The one or more heater elements are configured to apply heat during a thermal welding cycle. Each thermocouple is configured to monitor a temperature of the heat.

The portable conduction welding apparatus further comprises a force application and monitoring system coupled to the heating system. The force application and monitoring system comprises a clamp assembly. The clamp assembly comprises a clamp device having a first clamp jaw pivotably coupled to a second clamp jaw. The first clamp jaw is coupled to a first clamp jaw assembly, and the second clamp jaw is coupled to a second clamp jaw assembly. The first clamp jaw assembly is positioned opposite the second clamp jaw assembly. The clamp assembly further comprises an actuator assembly coupled to the clamp device. The actuator assembly is configured to move the clamp device between an open position and a closed position.

The force application and monitoring system further comprises a load cell coupled to the clamp assembly. The load cell is configured to monitor a force applied by the clamp assembly.

The portable conduction welding apparatus further comprises an indexing assembly coupled to the clamp assembly. The indexing assembly comprises a plurality of indexing pins configured to index the first heater assembly and the second heater assembly to the clamp assembly. The portable conduction welding apparatus further comprises one or more controllers having one or more power supplies, to control and to power the portable conduction welding apparatus.

The portable conduction welding apparatus is portable and is configured to weld together at a weldline, a first thermoplastic composite part aligned to the first heater assembly and a second thermoplastic composite part aligned to the second heater assembly, when the first heater assembly and the second heater assembly are indexed to the clamp assembly, and the clamp device is in the closed position, by applying the force from the clamp assembly on the weldline, and conducting the heat from the one or more heater elements at the weldline during the thermal welding cycle, to melt thermoplastic composite material of the first thermoplastic composite part and the second thermoplastic composite part at the weldline, to obtain welded thermoplastic composite parts.

In another version of the disclosure, there is provided a portable conduction welding system for conduction welding of thermoplastic composite parts. The portable conduction welding system comprises a portable conduction welding apparatus.

The portable conduction welding apparatus comprises a heating system. The heating system comprises a first heater assembly, and second heater assembly positioned opposite the first heater assembly. Each of the first heater assembly and the second heater assembly comprises a machined insulation block, a machined heater block positioned within the machined insulation block, one or more cartridge heaters, and a thermocouple. Each of the one or more cartridge heaters is coupled to the machined heater block, and each of the one or more cartridge heaters is configured to apply heat during a thermal welding cycle. The thermocouple is coupled to the machined heater block. Each thermocouple is configured to monitor a temperature of the heat.

The portable conduction welding apparatus further comprises a force application and monitoring system coupled to the heating system. The force application and monitoring system comprises a clamp assembly. The clamp assembly comprises a clamp device having a first clamp jaw pivotably coupled to a second clamp jaw. The first clamp jaw is coupled to a first clamp jaw assembly, and a second clamp jaw is coupled to a second clamp jaw assembly. The first clamp jaw assembly is positioned opposite the second clamp jaw assembly. The clamp assembly further comprises an actuator assembly coupled to the clamp device. The actuator assembly is configured to move the clamp device between an open position and a closed position.

The force application and monitoring system further comprises a load cell coupled to the clamp assembly. The load cell is configured to monitor a force applied by the clamp assembly.

The portable conduction welding apparatus further comprises an indexing assembly coupled to the clamp assembly. The indexing assembly comprises a plurality of indexing pins configured to index the first heater assembly to the first clamp jaw assembly, and configured to index the second heater assembly to the second clamp jaw assembly. The portable conduction welding apparatus further comprises one or more controllers having one or more power supplies, to control and to power the portable conduction welding apparatus.

The portable conduction welding system further comprises a support apparatus configured for attachment to the portable conduction welding apparatus. The portable conduction welding system further comprises a carrying case configured to secure and to transport the portable conduction welding apparatus.

The portable conduction welding apparatus is portable and is configured to weld together at a weldline, a first thermoplastic composite part aligned to the first heater assembly and a second thermoplastic composite part aligned to the second heater assembly, when the first heater assembly is indexed to the first clamp jaw assembly, the second heater assembly is indexed to the second clamp jaw assembly, and the clamp device is in the closed position, by applying the force from the clamp assembly on the weldline, and conducting the heat from the one or more cartridge heaters of each of the first heater assembly and the second heater assembly, at the weldline, during the thermal welding cycle, to melt thermoplastic composite material of the first thermoplastic composite part and the second thermoplastic composite part at the weldline, to obtain welded thermoplastic composite parts.

In another version of the disclosure, there is provided a method of using a portable conduction welding apparatus for conduction welding of thermoplastic composite parts. The method comprises providing the portable conduction welding apparatus. The portable conduction welding apparatus comprises a heating system. The heating system comprises a first heater assembly, and a second heater assembly positioned opposite the first heater assembly. Each of the first heater assembly and the second heater assembly comprises a machined insulation block, a machined heater block positioned within the machined insulation block, one or more heater elements coupled to the machined heater block, and a thermocouple coupled to the machined heater block. The thermocouple is configured to monitor a temperature of heat applied by the one or more heater elements.

The portable conduction welding apparatus further comprises a force application and monitoring system coupled to the heating system. The force application and monitoring system comprises a clamp assembly. The clamp assembly comprises a clamp device having a first clamp jaw pivotably coupled to a second clamp jaw. The first clamp jaw is coupled to a first clamp jaw assembly, and a second clamp jaw is coupled to a second clamp jaw assembly. The first clamp jaw assembly is positioned opposite the second clamp jaw assembly. The clamp assembly further comprises an actuator assembly coupled to the clamp device.

The force application and monitoring system further comprises a load cell coupled to the clamp assembly. The load cell is configured to monitor a force applied by the clamp assembly.

The portable conduction welding apparatus further comprises an indexing assembly coupled to the clamp assembly. The indexing assembly comprises a plurality of indexing pins comprising a plurality of first indexing pins and a plurality of second indexing pins. The portable conduction welding apparatus further comprises one or more controllers having one or more power supplies, to control and to power the portable conduction welding apparatus.

The method further comprises aligning a first thermoplastic composite part to the first heater assembly. The method further comprises aligning a second thermoplastic composite part to the second heater assembly.

The method further comprises indexing the first heater assembly to the first clamp jaw assembly with the plurality of first indexing pins. The method further comprises indexing the second heater assembly to the second clamp jaw assembly with the plurality of second indexing pins.

The method further comprises moving the clamp device, with the actuator assembly, from an open position to a closed position. The method further comprises applying the force, by the clamp assembly, on a weldline comprising contact interfaces of the first thermoplastic composite part and the second thermoplastic composite part.

The method further comprises activating the one or more heater elements of the first heater assembly, and activating the one or more heater elements of the second heater assembly. The method further comprises running a thermal welding cycle, and applying heat from the one or more heater elements of the first heater assembly and the one or more heater elements of the second heater assembly, at the weldline, to melt thermoplastic composite material of the first thermoplastic composite part and the second thermoplastic composite part together at the weldline, to obtain welded thermoplastic composite parts.

The method further comprises cooling the welded thermoplastic composite parts. The method further comprises removing the cooled welded thermoplastic composite parts from the portable conduction welding apparatus.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or claims.
FIG. 1 is an illustration of a block diagram of an exemplary version of a portable conduction welding apparatus and an exemplary version of a portable conduction welding system that includes the portable conduction welding apparatus of the disclosure;
FIG. 2A is an illustration of a right side perspective view of an exemplary version of a portable conduction welding apparatus of the disclosure;
FIG. 2B is an illustration of a left side perspective view of the portable conduction welding apparatus of FIG. 2A;
FIG. 3A is an illustration of a right side view of an exemplary version of a portable conduction welding apparatus of the disclosure with an air cylinder actuator assembly;
FIG. 3B is an illustration of a cross-sectional front view of the portable conduction welding apparatus, taken along lines 3B-3B, of FIG. 3A, and showing a first thermoplastic composite part aligned to a first heater assembly, and a second thermoplastic composite part aligned to a second heater assembly;
FIG. 3C is an illustration of a cross-sectional right side view of the portable conduction welding apparatus of FIG. 3A, and showing a partial air cylinder actuator assembly;
FIG. 3D is an illustration of a right side view of the portable conduction welding apparatus of FIG. 3A, where a heating system has been removed, and showing a partial air cylinder actuator assembly;
FIG. 3E is an illustration of a right side view of another exemplary version of a portable conduction welding apparatus of the disclosure with a threaded screw rod actuator assembly;
FIG. 4A is an illustration of a right side bottom perspective view of an exemplary version of a first machined heater block;
FIG. 4B is an illustration of a top perspective view of an exemplary version of a first machined insulation block;
FIG. 5A is an illustration of a front top perspective view of an exemplary version of a second machined insulation block;
FIG. 5B is an illustration of a top perspective view of an exemplary version of a second machined heater block;
FIG. 6A is an illustration of a right side view of an exemplary version of an air cylinder assembly of an air cylinder actuator assembly of the disclosure;
FIG. 6B is an illustration of a right side sectional view of an exemplary version of a cylinder adapter of the air cylinder assembly of FIG. 6A;
FIG. 6C is an illustration of a right side perspective view of the cylinder adapter of the air cylinder assembly of FIG. 6A;
FIG. 7 is an illustration of a front perspective view of an exemplary version of a portable conduction welding system of the disclosure, showing an exemplary version of a portable conduction welding apparatus and a support apparatus packed in an exemplary version of a carrying case;
FIG. 8 is an illustration of a flow diagram of an exemplary version of a method of the disclosure;
FIG. 9 is an illustration of a perspective view of a user aligning a first thermoplastic composite part to a first heater assembly;
FIG. 10 is an illustration of a left side perspective view of a user indexing the first heater assembly with the aligned first thermoplastic composite part of FIG. 9, to a first clamp jaw assembly, and indexing a second heater assembly with an aligned second thermoplastic composite part to a second clamp jaw assembly, of a portable conduction welding apparatus of the disclosure;
FIG. 11 is an illustration of front perspective view of an exemplary version of the portable conduction welding apparatus of FIG. 10, with the first thermoplastic composite part and the second thermoplastic composite part in a thermal welding cycle;
FIG. 12A is an illustration of a perspective view of an exemplary version of two welded thermoplastic composite parts welded together using an exemplary version of a portable conduction welding apparatus and method of the disclosure;
FIG. 12B is an illustration of a perspective view of another exemplary version of two welded thermoplastic composite parts welded together using an exemplary version of a portable conduction welding apparatus and method of the disclosure;
FIG. 13 is an illustration of a perspective view of an aircraft that incorporates thermoplastic composite aircraft parts that can be welded using an exemplary version of a portable conduction welding apparatus and method of the disclosure;
FIG. 14 is an illustration of a flow diagram of an exemplary aircraft manufacturing and service method; and
FIG. 15 is an illustration of an exemplary block diagram of an aircraft.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one version" or "a version". The instances of the phrases "one version" or "a version" do not necessarily refer to the same version. Particular features, structures, or characteristics may be combined in any suitable manner consistent with this disclosure. All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, the terms "first", "second", etc., are used as labels for nouns that they precede, and do not imply any type of ordering (e.g., spatial, temporal, logical, etc.).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

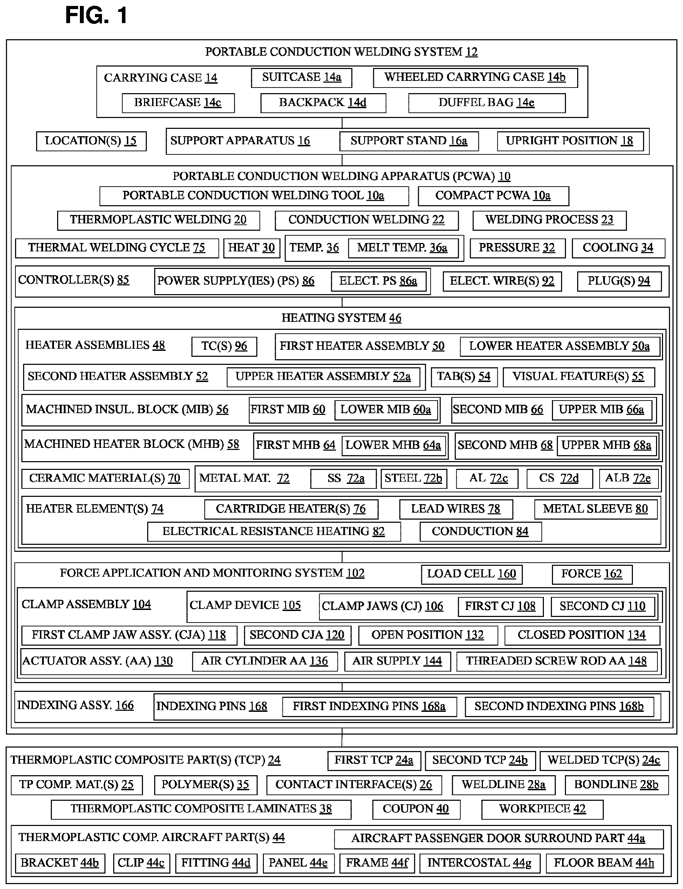

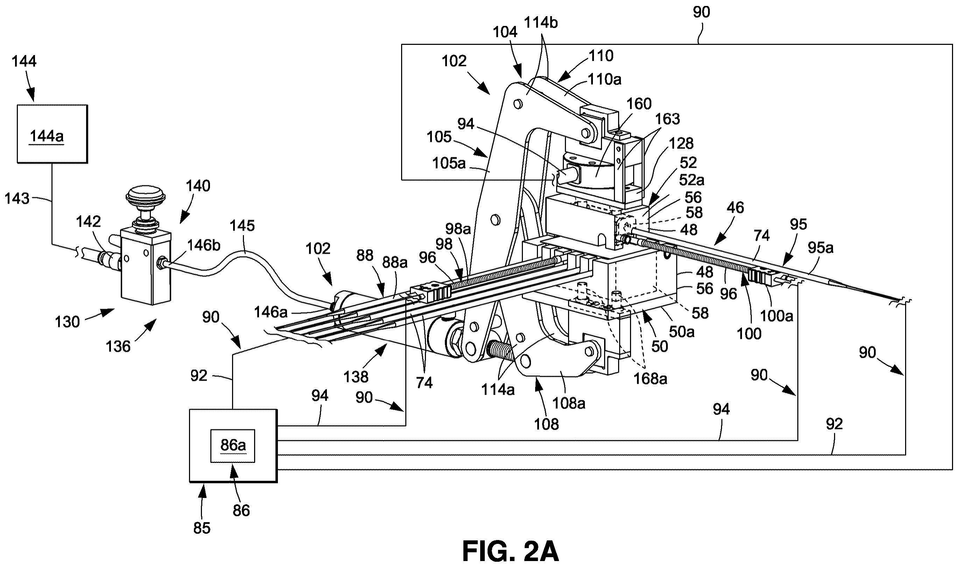

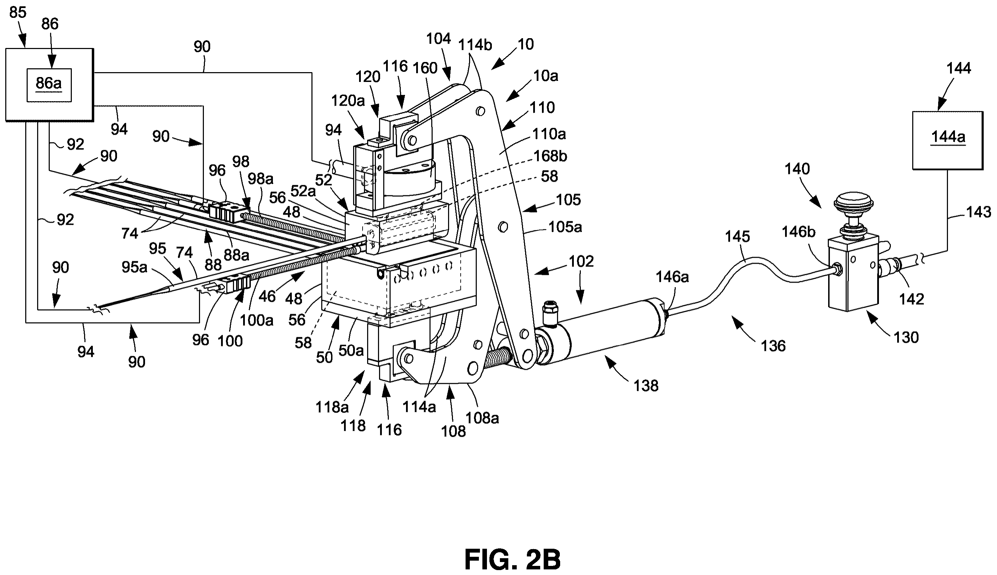

Now referring to FIG. 1, FIG. 1 is an illustration of a block diagram of an exemplary version of a portable conduction welding apparatus (PCWA) 10, such as a portable conduction welding tool 10a, of the disclosure, and an exemplary version of a portable conduction welding system 12 of the disclosure. FIG. 2A is an illustration of a right side perspective view of an exemplary version of a portable conduction welding apparatus 10 such as the portable conduction welding tool 10a, of the disclosure, and FIG. 2B is an illustration of a left side perspective view of the portable conduction welding apparatus 10, such as the portable conduction welding tool 10a, of FIG. 2A.

The blocks in FIG. 1 represent elements, and lines connecting the various blocks do not imply any particular dependency of the elements. Furthermore, the connecting lines shown in the various Figures contained herein are intended to represent example functional relationships and/or physical couplings between the various elements, but it is noted that other alternative or additional functional relationships or physical connections may be present in versions disclosed herein. One or more of these blocks may be combined, divided, or combined and divided into different blocks when implemented in an illustrative example. Further, the illustrations of the portable conduction welding apparatus 10 and the portable conduction welding system 12 in FIG. 1 are not meant to imply physical or architectural limitations to the manner in which an illustrative example may be implemented. Other components in addition to, or in place of, the ones illustrated may be used. Some components may be unnecessary.

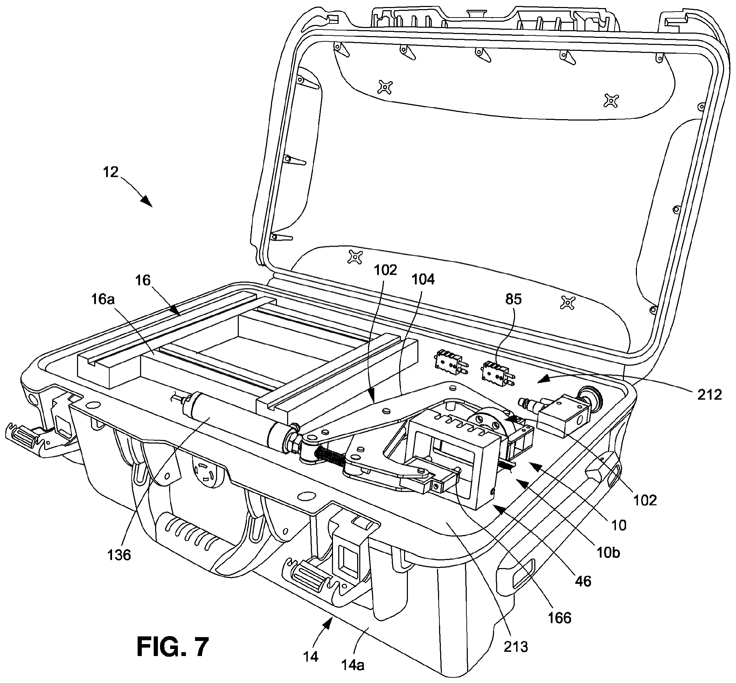

As shown in FIG. 1, in one version, the portable conduction welding system 12 comprises the portable conduction welding apparatus (PCWA) 10 (see also FIGS. 2A-2B). As further shown in FIG. 1, in one version, the portable conduction welding system 12 comprises a carrying case 14 (see also FIG. 7) configured to hold, secure, and transport the portable conduction welding apparatus 10. Preferably, the portable conduction welding apparatus 10 is a compact portable conduction welding apparatus (PCWA) 10b (see FIGS. 1, 7) designed to be handheld, secured, and transported in the carrying case 14 to one or more locations 15. As shown in FIG. 1, the carrying case 14 may comprise a suitcase 14a (see also FIG. 7), a wheeled carrying case 14b, a briefcase 14c, a backpack 14d, a duffel bag 14e, or another suitable carrying case 14, or another suitable transporting device or means.

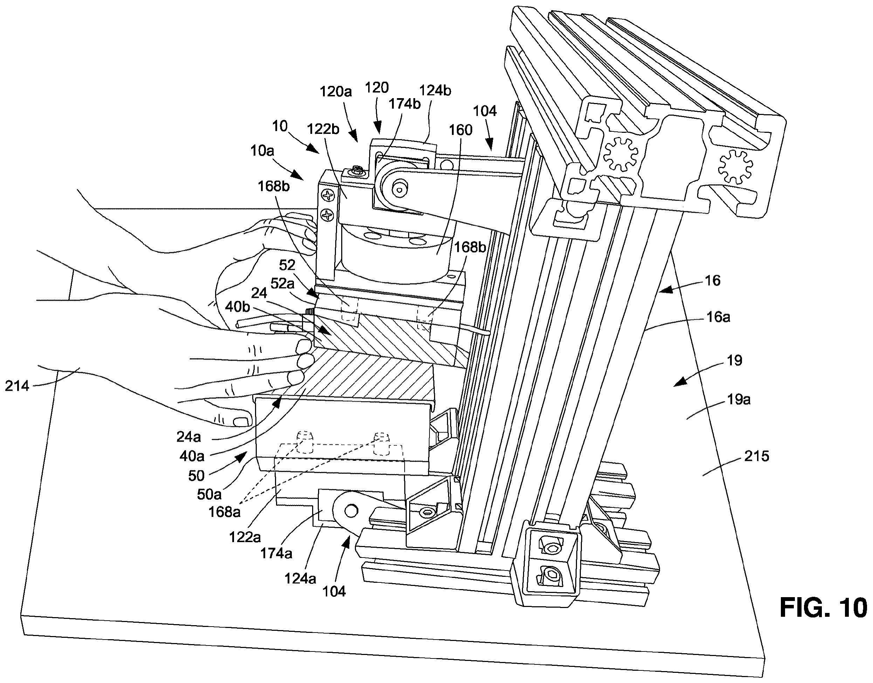

As shown in FIG. 1, in one version, the portable conduction welding system 12 further comprises a support apparatus 16, such as a support stand 16a, to enable the portable conduction welding apparatus 10 to be secured in an upright position 18 on a surface 19 (see FIG. 10), such as a tabletop surface 19a (see FIG. 10), a platform surface, a floor surface, or another surface where the portable conduction welding apparatus 10 is positioned or set up. In another version, the support apparatus 16 is optional and the portable conduction welding apparatus 10 is not used with the support apparatus 16.

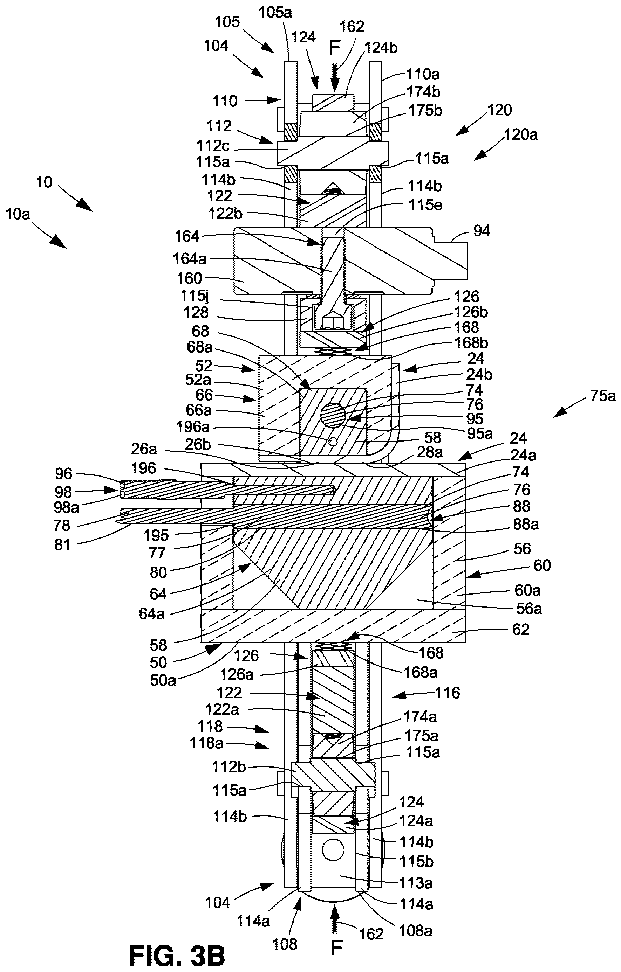

As shown in FIG. 1, the portable conduction welding apparatus 10 is used to perform thermoplastic welding 20, such as conduction welding 22, in a welding process 23, to weld together thermoplastic composite parts (TCP(S)) 24, for example, two thermoplastic composite parts 24, such as a first thermoplastic composite part (TCP) 24a, and a second thermoplastic composite part (TCP) 24b. The thermoplastic welding 20, such as the conduction welding 22, of the thermoplastic composite parts 24, such as the two thermoplastic composite parts 24, is carried out by using the portable conduction welding apparatus 10 to heat up, to melt, and to fuse together thermoplastic composite material (TP COMP. MAT.) 25 (see FIG. 1), or thermoplastic composite materials (TP COMP. MAT.(S)) 25 (see FIG. 1), at contact interfaces 26 (see FIGS. 1, 3B, 11), of the thermoplastic composite parts 24, referred to as a weldline 28a (see FIGS. 1, 3B), or a bondline 28b (see FIGS. 1, 3B), with application of heat 30 (see FIG. 1) and pressure 32 (see FIG. 1), followed by cooling 34 (see FIG. 1).

The contact interfaces 26 may comprise a first contact interface 26a (see FIGS. 3B, 10) of the first thermoplastic composite part 24a (see FIGS. 3B, 10) and a second contact interface 26b (see FIGS. 3B, 10) of the second thermoplastic composite part 24b (see FIGS. 3B, 10). The contact interfaces 26 are portions of the first thermoplastic composite part 24a and the second thermoplastic composite part 24b in contact with each other during the thermoplastic welding 20, such as the conduction welding 22.

The thermoplastic welding 20, such as the conduction welding 22, heats polymers 35 (see FIG. 1) of the thermoplastic composite material 25 or thermoplastic composite materials 25, of the thermoplastic composite parts 24, to a temperature (TEMP.) 36 (see FIG. 1), such as a melt temperature (TEMP.) 36a (see FIG. 1), or to their respective melt temperatures 36a, to melt and to fuse the polymers 35 at the weldline 28a, or bondline 28b, so that the two thermoplastic composite parts 24, such as the first thermoplastic composite part 24a and the second thermoplastic composite part 24b, are in intimate contact with each other, to form and to obtain welded thermoplastic composite parts (TCP(S)) 24c (see FIG. 1).

The welded thermoplastic composite parts 24c are then cooled. Preferably, the welded thermoplastic composite parts 24c are cooled with a controlled cooling process at a sufficient cooling temperature range and a sufficient cooling temperature rate, to obtain acceptable crystallization of the polymers 35. Once the welded thermoplastic composite parts 24c are sufficiently cooled, the welded thermoplastic composite parts 24c are removed from the portable conduction welding apparatus 10 for further manufacture, assembly, repair, or other suitable uses. After removing the welded thermoplastic composite parts 24c that are cooled from the portable conduction welding apparatus 10, the portable conduction welding apparatus 10 may be used to weld other thermoplastic composite parts 24 at that location 15 (see FIG. 1), or the portable conduction welding apparatus 10 may be secured within the carrying case 14, or another suitable transport apparatus or transport means, and transported within the carrying case 14, or another suitable transport apparatus or transport means, to another location 15 to perform thermoplastic welding 20, such as conduction welding 22, of other thermoplastic composite parts 24.

As shown in FIG. 1, the thermoplastic composite parts 24, such as the first thermoplastic composite part 24a and the second thermoplastic composite part 24b, may each comprise one or more of, one or more thermoplastic composite laminate 38, a coupon 40, a workpiece 42, a thermoplastic composite aircraft part 44, or thermoplastic composite aircraft component, or another suitable thermoplastic composite part 24. As shown in FIG. 1, each thermoplastic composite aircraft part 44 may comprise an aircraft passenger door surround part 44a, a bracket 44b, a clip 44c, a fitting 44d, a panel 44e, a frame 44f, an intercostal 44g, a floor beam 44h, or another suitable thermoplastic composite aircraft part 44. Examples may include welding a fitting 44d, such as a pad up fitting, to a floor beam 44h, in order to stiffen the floor beam 44h in a particular area, or welding a bracket 44b to an intercostal 44g, or other suitable welding of two thermoplastic composite parts 24. The thermoplastic composite parts 24 may also comprise brackets, clips, fittings, frames, beams, and other parts or components to be welded together and used in spacecraft, rotorcraft, automobiles, watercraft, and other vehicles and structures.

The thermoplastic composite material 25, or thermoplastic composite materials 25, comprising each of the thermoplastic composite parts 24 may comprise thermoplastic polymer prepreg, polyphenylene sulfide (PPS), polyetherimide (PEI), polyether ketone ketone (PEKK), polyether ether ketone (PEEK), nylon, or other suitable thermoplastic composite materials 25. The thermoplastic composite material 25, or thermoplastic composite materials 25, may include reinforced thermoplastic composite laminates, unidirectional tapes, pre-impregnated fabrics that use either carbon or glass as the primary reinforcement, fiber reinforced plastic, pre-impregnated carbon fiber fabrics, or another suitable polymer matrix thermoplastic composite material.

As shown in FIG. 1, 2A-2B, the portable conduction welding apparatus 10 comprises a heating system 46 having a plurality of heater assemblies 48. In one version, as shown in FIGS. 1, 2A-2B, the plurality of heater assemblies 48 of the heating system 46 comprise a first heater assembly 50, such as a lower heater assembly 50a, or a bottom heater assembly, and a second heater assembly 52, such as an upper heater assembly 52a, or a top heater assembly. As shown in FIGS. 2A-2B, the second heater assembly 52, such as the upper heater assembly 52a, is positioned opposite the first heater assembly 50, such as the lower heater assembly 50a. As shown in FIGS. 2A-2B, the first heater assembly 50, such as the lower heater assembly 50a, is separate from the second heater assembly 52, such as the upper heater assembly 52a. In addition, each of the first heater assembly 50 and the second heater assembly 52 is removable from the portable conduction welding apparatus 10.

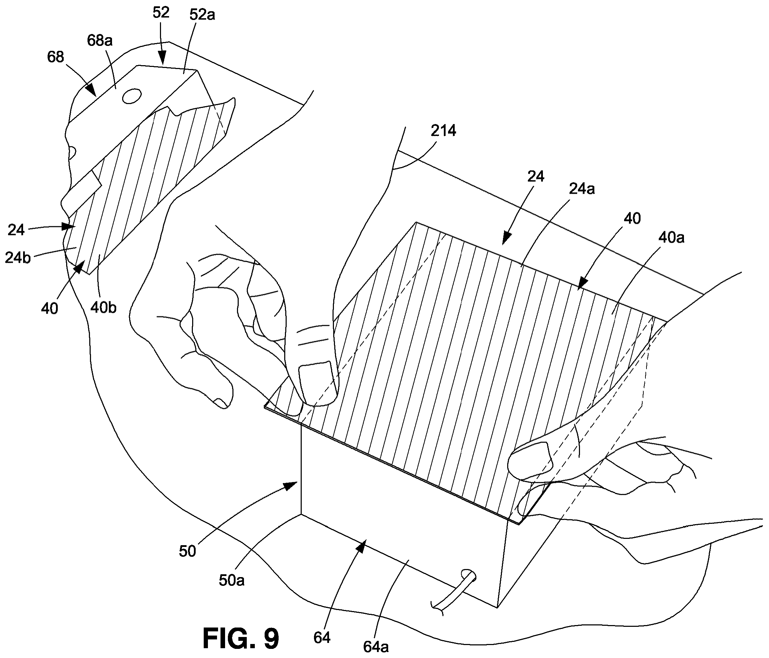

The first thermoplastic composite part 24a (see FIGS. 3B, 9) may be aligned to the first heater assembly 50, such as the lower heater assembly 50a, with one or more tabs 54 (see FIG. 1), one or more visual features 55 (see FIG. 1), or other suitable visual devices or mechanisms, coupled either to the first heater assembly 50 or to the first thermoplastic composite part 24a. Similarly, the second thermoplastic composite part 24b (see FIGS. 3B, 9) may be aligned to the second heater assembly 52, such as the upper heater assembly 52a, with one or more tabs 54, one or more visual features 55, or other suitable visual devices or mechanisms, coupled either to the second heater assembly 52 or to the second thermoplastic composite part 24b.

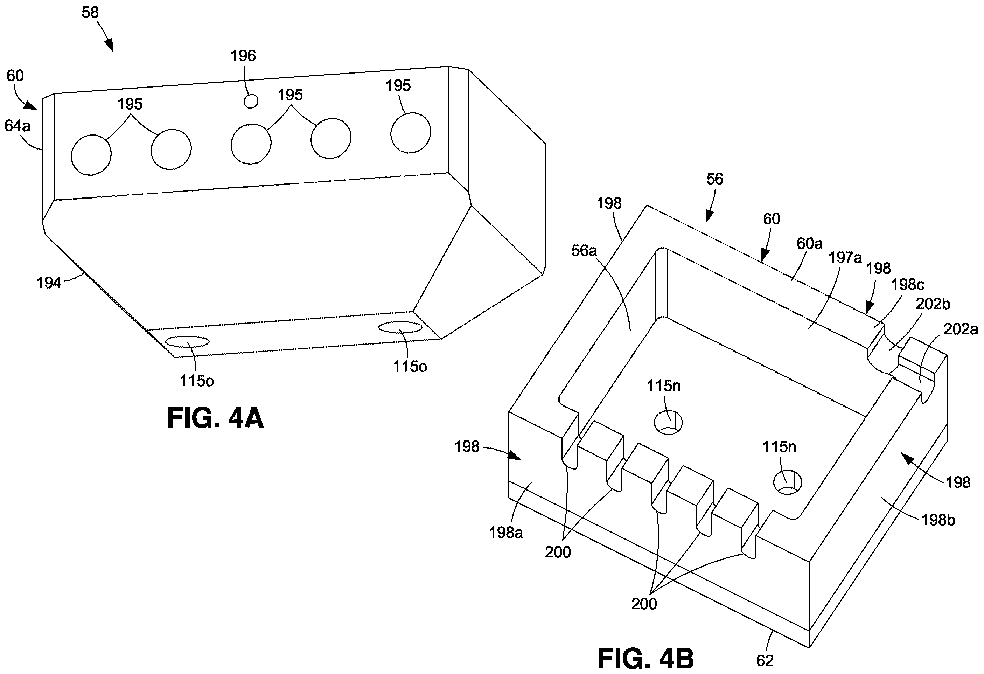

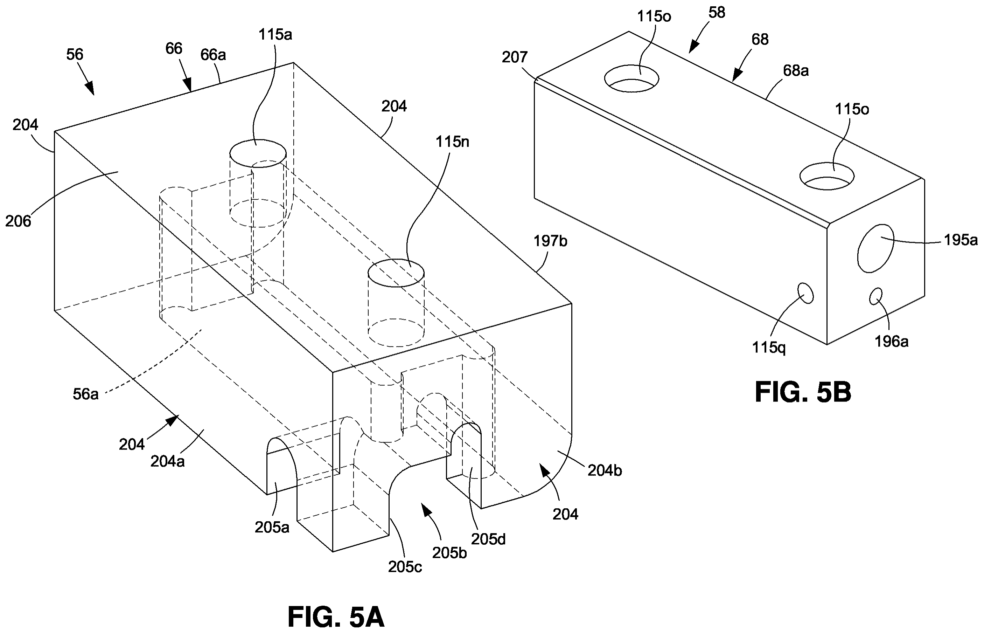

As shown in FIGS. 1, 2A-2B, each of the first heater assembly 50 and the second heater assembly 52 of the plurality of heater assemblies 48 comprises a machined insulation (INSUL.) block (MIB) 56, and a machined heater block (MHB) 58 positioned within the machined insulation block 56, when installed in the portable conduction welding apparatus 10. When the machined heater blocks 58 and the machined insulation blocks 56 are not installed in the portable conduction welding apparatus 10, each machined heater block 58 can be placed unattached in a machined insulation block interior 56a (see FIGS. 4B, 5A) of each respective machined insulation block 56. When the machined heater blocks 58 and the machined insulation blocks 56 are installed in the portable conduction welding apparatus 10, each machined heater block 58 is coupled to each respective machined insulation block 56.

In particular, as shown in FIGS. 1, 3A, 4B, the first heater assembly 50, such as the lower heater assembly 50a, comprises a first machined insulation block (MIB) 60, such as a lower machined insulation block (MIB) 60a, or a bottom machined insulation block. The first machined insulation block 60, such as the lower machined insulation block 60a, is coupled to a bottom cap portion 62 (see FIGS. 2A-2B, 4B). In particular, as shown in FIGS. 1, 2A-2B, 4A, the first heater assembly 50, such as the lower heater assembly 50a, comprises a first machined heater block (MHB) 64, such as a lower machined heater block (MHB) 64a, or a bottom machined heater block, positioned within the first machined insulation block 60, such as the lower machined insulation block 60a.

In particular, as shown in FIGS. 1, 3B, 5A, the second heater assembly 52, such as the upper heater assembly 52a, comprises a second machined insulation block (MIB) 66, such as an upper machined insulation block (MIB) 66a, or a top machined insulation block. In particular, as shown in FIGS. 1, 2A-2B, 5B, the second heater assembly 52, such as the upper heater assembly 52a, comprises a second machined heater block (MHB) 68, such as an upper machined heater block (MHB) 68a, or a top machined heater block, positioned within the second machined insulation block 66, such as the upper machined insulation block 66a.

As shown in FIG. 3B, in one version, the first machined heater block 64, such as the lower machined heater block 64a, is larger in size than the second machined heater block 68, such as the upper machined heater block 68a. In other versions, the first machined heater block 64, such as the lower machined heater block 64a, may be smaller in size, or equal in size, as compared to a size of the second machined heater block 68, such as the upper machined heater block 68a.

In one exemplary version, the first machined heater block 64, such as the lower machined heater block 64a, has a surface area of four (4) inches by five (5) inches. In other versions the first machined heater block 64 has a surface area of less than four (4) inches by five (5) inches, or greater than four (4) inches by five (5) inches. For example, if larger thermoplastic composite parts 24 need to be heated, the first machined heater block 64, such as the lower machined heater block 64a, may have a surface area of six (6) inches by six (6) inches, or may have a surface area of ten (10) inches by ten (10) inches, or may have another suitable surface area.

Each machined insulation block 56, such as the first machined insulation block 60 and the second machined insulation block 66, is preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. Each machined insulation block 56, such as the first machined insulation block 60 and the second machined insulation block 66, may also be made of carbon-ceramic matrix, carbon-carbon composite materials, or other suitable materials.

Each machined heater block 58, such as the first machined heater block 64 and the second machined heater block 68, is preferably made of a metal material (MAT.) 72 (see FIG. 1). Preferably, the metal material 72 comprises, as shown in FIG. 1, stainless steel (SS) 72a, steel 72b, aluminum (AL) 72c, carbon steel (CS) 72d, aluminum bronze (ALB) 72e, or another suitable metal material 72.

As shown in FIGS. 1, 2A-2B, each of the first heater assembly 50 and the second heater assembly 52 of the plurality of heater assemblies 48 further comprises one or more heater elements 74 coupled to each of the machined heater blocks 58. The one or more heater elements 74 are configured to apply, and do apply, heat 30 (see FIG. 1) during a thermal welding cycle 75 (see FIG. 1) of the thermoplastic welding 20 (see FIG. 1), such as the conduction welding 22 (see FIG. 1).

In one version, as shown in FIGS. 1, 3B-3C, each of the one or more heater elements 74 comprises a cartridge heater 76 having one or more heating wires 77 housed in a metal sleeve 80, or metal sheath, and attached to one or more lead wires 78. Each heater element 74, such as each cartridge heater 76, is connected to one of the one or more controllers 85 (see FIGS. 2A-2B). Each cartridge heater 76 may further comprise insulation material, such as lead wire insulation material, and/or metal sleeve insulation material, to allow optimal heat transfer. The insulation material may comprise magnesium oxide, or another suitable insulation material.

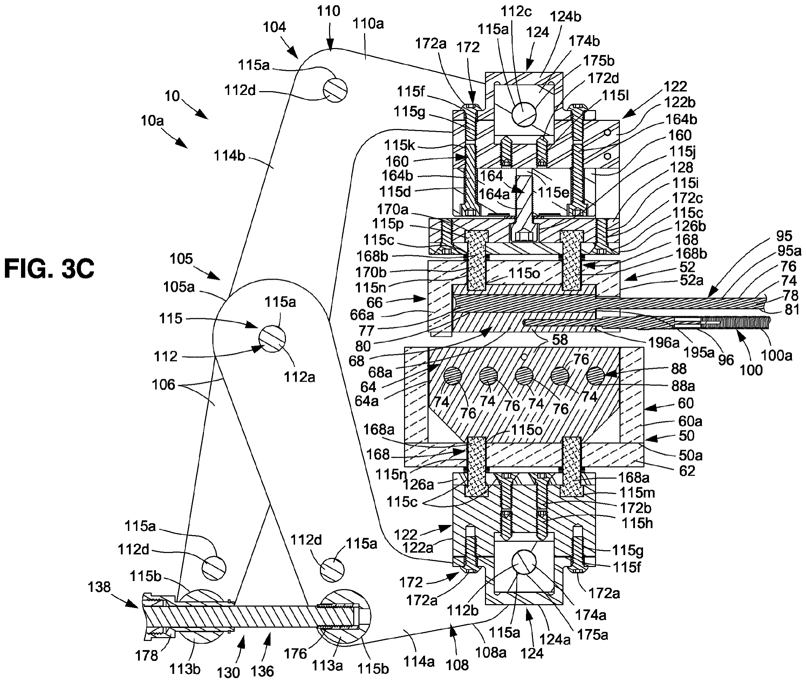

Each cartridge heater 76 is preferably a resistance heater that provides electrical resistance heating 82 (see FIG. 1) through conduction 84 (see FIG. 1) from the one or more cartridge heaters 76 to the thermoplastic composite parts 24, and in particular, to the weldline 28a (see FIG. 3B), or bondline 28b (see FIG. 3B), of the thermoplastic composite parts 24 (see FIG. 3B) being welded together. In one version, each cartridge heater 76 comprises one or more heating wires 77 (see FIGS. 1, 3B-3C), such as one or more resistance heating wires, wound on a supporting core, such as a ceramic core, within the metal sleeve 80 (see FIGS. 3B, 3C). The metal sleeve 80 is preferably made of a metal material 72 (see FIG. 1), such as stainless steel 72a (see FIG. 1), stainless steel alloys, nickel-based alloys, or other suitable metal materials 72. As shown in FIGS. 3B-3C, the one or more lead wires 78 of each heater element 74, such as each cartridge heater 76, may be covered with a lead wire covering 81 that may be a standard lead wire covering, a braided lead wire covering, an armored lead wire covering, or another suitable lead wire covering 81.

Each of the one or more lead wires 78 of each cartridge heater 76 is/are connected to one of the one or more controllers 85 (see FIGS. 2A-2B) having one or more power supplies (PS) 86 (see FIGS. 1, 2A-2B), such as one or more electrical (ELECT.) power supplies (PS) 86a (see FIGS. 1, 2A-2B), that supply power, such as electrical power, to the heater elements 74, such as the cartridge heaters 76. In one version, the power supply 86, such as the electrical power supply 86a, comprises a standard power input of 120 V (one-hundred twenty Volts).

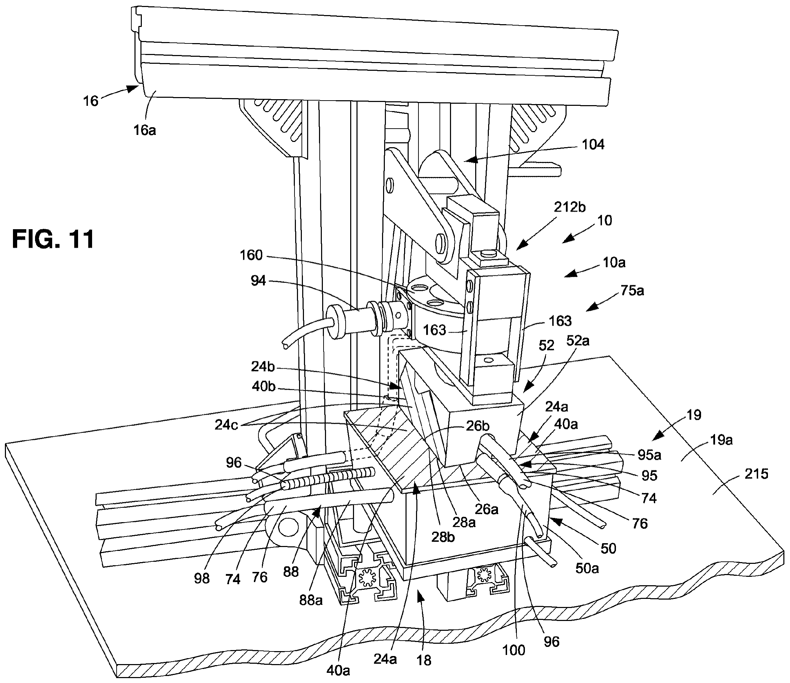

In one version, electrical power from the power supply 86, such as the electrical power supply 86a, is transferred through the lead wires 78 to the one or more heating wires 77 housed in the metal sleeve 80, to cause the one or more heating wire 77 to heat up and to generate heat 30 (see FIG. 1). The electrical resistance transfers as heat 30, via conduction 84 (see FIG. 1), to the thermoplastic composite parts 24 (see FIGS. 3B, 11), and in particular, to the weldline 28a (see FIGS. 1, 3B, 11), or bondline 28b (see FIGS. 1, 11), of the thermoplastic composite parts 24, to allow for quick and efficient electrical resistance heating 82 (see FIG. 1).

In particular, as shown in FIGS. 1, 2A-2B, the first heater assembly 50, such as the lower heater assembly 50a, comprises one or more heater elements 74, such as one or more first heater elements 88, for example, one or more lower heater elements 88a, or bottom heater elements. As shown in FIGS. 3B, 3C, the one or more heater elements 74, such as the one or more first heater elements 88, for example, the one or more lower heater elements 88a, are coupled to the first machined heater block 64, such as the lower machined heater block 64a. In one version, FIGS. 2A-2B show five (5) first heater elements 88, such as five (5) lower heater elements 88a, coupled to the first heater assembly 50, such as the lower heater assembly 50a. However, the number of first heater elements 88, such as lower heater elements 88a, may be one (1) to four (4), or greater than five (5). The size of the thermoplastic composite parts 24 being welded together, preferably determine the number of heater elements 74, such as first heater elements 88, for example, lower heater elements 88a, coupled to the first machined heater block 64, such as the lower machined heater block 64a. As shown in FIGS. 2A-2B, each of the five (5) first heater elements 88, such as the five (5) lower heater elements 88a, are attached to the controller 85 having the power supply 86, such as the electrical power supply 86a, via one or more connector elements 90, such as one or more electrical wires 92. The connector elements 90 may comprise one or more electrical (ELECT.) wires 92 (see FIG. 1), one or more plugs 94 (see FIG. 1), or other types of connector elements 90, such as electrical connector elements.

In particular, as further shown in FIGS. 1, 2A-2B, the second heater assembly 52, such as the upper heater assembly 52a, comprises one or more heater elements 74, such as one or more second heater elements 95, for example, one or more upper heater elements 95a, or top heater elements. As shown in FIGS. 3B, 3C, the one or more heater elements 74, such as the one or more second heater elements 95, for example, the one or more upper heater elements 95a, are coupled to the second machined heater block 68, such as the upper machined heater block 68a. In one version, FIGS. 2A-2B show one (1) second heater element 95, such as one (1) upper heater element 95a, coupled to the second heater assembly 52, such as the upper heater assembly 52a. However, the number of second heater elements 95, such as upper heater elements 95a, may be greater than one (1). The size of the thermoplastic composite parts 24 being welded together, preferably determine the number of heater elements 74 coupled to the second machined heater block 68, such as the upper machined heater block 68a. As shown in FIGS. 2A-2B, each second heater element 95, such as each upper heater element 95a, is attached to the controller 84 having the power supply 86, such as the electrical power supply 86a, via a connector element 90, such as an electrical wire 92.

As shown in FIGS. 1, 2A-2B, each of the first heater assembly 50 and the second heater assembly 52 of the plurality of heater assemblies 48 further comprises one or more thermocouples (TC(S)) 96 coupled to the machined heater block 58. In FIGS. 2A-2B, although one thermocouple 96 is shown coupled, or attached, to the each machined heater block 58, more than one thermocouple 96 may be coupled, or attached, to each machined heater block 58. Each thermocouple 96 is configured to monitor, and does monitor, the temperature 36 (see FIG. 1) of the heat 30 (see FIG. 1) applied by the one or more heater elements 74, to the thermoplastic composite parts 24, during the thermal welding cycle 75 of the thermoplastic welding 20, or conduction welding 22. Each thermocouple 96 may be used as a differential temperature sensor. As used herein, "thermocouple" means an electrical device having two dissimilar electrical conductors forming an electrical junction, to produce a temperature-dependent voltage as a result of the Seebeck effect, and this voltage can be interpreted to measure temperature. Thermocouple response time can be as little as one second, and when calibrated correctly, a thermocouples can provide a very accurate and precise temperature measurement.

The type of thermocouple 96 used depends on the temperature range and sensitivity needed. For the portable conduction welding apparatus 10, the thermocouple 96 preferably comprises a K-type thermocouple used for high temperature measurements. The K-type thermocouple is very accurate at higher temperatures. The K-type thermocouple comprises two pieces of nickel-chromium alloy and nickel-aluminum alloy, and operates in a temperature range of -200 °C (minus two-hundred degrees Celsius) to 1350 °C (one-thousand three-hundred fifty degrees Celsius (-330 °F (minus three-hundred thirty degrees Fahrenheit) to 2460 °F (two-thousand four-hundred sixty degrees Fahrenheit)).

Other suitable thermocouples 96 that may be used comprise a J-type thermocouple comprised of iron and copper-nickel alloy, and operating in a temperature range of -40 °C (minus forty degrees Celsius) to 1200 °C (one-thousand two-hundred degrees Celsius) (-40 °F (minus forty degrees Fahrenheit) to 2192 °F (two-thousand one-hundred ninety-two degrees Fahrenheit)); an E-type thermocouple comprised of nickel-chromium alloy and copper-nickel alloy, and operating in a temperature range of -270 °C (minus two-hundred seventy degrees Celsius) to 740 °C (seven-hundred forty degrees Celsius) (-454 °F (minus four-hundred fifty-four degrees Fahrenheit) to 1364 °F (one-thousand three-hundred sixty-four degrees Fahrenheit)); or another suitable type of thermocouple 96.

In particular, as shown in FIGS. 2A-2B, the first heater assembly 50, such as the lower heater assembly 50a, comprises a thermocouple 96, such as a first thermocouple 98, for example, a lower thermocouple 98a, or a bottom thermocouple. As shown in FIGS. 3B, 3C, the thermocouple 96, such as the first thermocouple 98, for example, the lower thermocouple 98a, is coupled to the first machined heater block 64, such as the lower machined heater block 64a. The thermocouple 96, such as the first thermocouple 98, for example, the lower thermocouple 98a, is configured to monitor, and monitors, a temperature 36 of the heat 30 (see FIG. 1) applied by the heater elements 74, such as the first heater elements 88, for example, the lower heater elements 88a, to the first thermoplastic composite part 24a (see FIGS. 3B, 11). The first thermocouple 98 indicates how hot the first machined heater block 64 is during use.

In particular, as shown in FIGS. 2A-2B, the second heater assembly 52, such as the upper heater assembly 52a, comprises a thermocouple 96, such as a second thermocouple 100, for example, an upper thermocouple 100a, or a top thermocouple. As shown in FIGS. 3B, 3C, the thermocouple 96, such as the second thermocouple 100, for example, the upper thermocouple 100a, is coupled to the second machined heater block 68, such as the upper machined heater block 68a. The thermocouple 96, such as the second thermocouple 100, for example, the upper thermocouple 100a, is configured to monitor, and monitors, a temperature 36 of the heat 30 applied by the heater element 74, such as the second heater element 95, for example, the upper heater element 95a, to the second thermoplastic composite part 24b. The second thermocouple 100 indicates how hot the second machined heater block 68 is during use.

As further shown in FIGS. 2A-2B, the first thermocouple 98, such as the lower thermocouple 98a, and the second thermocouple 100, such as the upper thermocouple 100a, are each attached via a connector element 90, such as a plug 94, to the controller 85 having the power supply 86, such as the electrical power supply 86a. As shown in FIGS. 2A-2B, the first thermocouple 98 and the second thermocouple 100, and the first heater elements 88 and the second heater elements 95, are powered with the power supply 86, such as the electrical power supply 86a.

Based on a temperature reading of the first thermocouple 98, the temperature 36 (see FIG. 1) and heat 30 (see FIG. 1) of the first heater elements 88 may be adjusted with the controller 85, such as a heat controller, to increase or to decrease the temperature 36 and the heat 30, to obtain a desired temperature 36 (see FIG. 1), such as a desired melt temperature 36a (see FIG. 1), and heat 30 during thermoplastic welding 20, such as conduction welding 22, of the thermoplastic composite parts 24 (see FIGS. 1, 3B, 11). Based on a temperature reading of the second thermocouple 100, the temperature 36 (see FIG. 1) and heat 30 (see FIG. 1) of the second heater element 95 may be adjusted with the controller 85, such as a heat controller, to increase or to decrease the temperature 36 and the heat 30, to obtain a desired temperature 36 and heat 30 during thermoplastic welding 20, such as conduction welding 22, of the thermoplastic composite parts 24.

As shown in FIGS. 1, 2A-2B, the portable conduction welding apparatus 10 further comprises a force application and monitoring system 102 coupled to the heating system 46. As further shown in FIGS. 1, 2A-2B, the force application and monitoring system 102 comprises a clamp assembly 104. The clamp assembly 104 comprises a clamp device 105 (see FIGS. 1, 2A-2B), such as in the form of a pivot C-clamp 105a (see FIGS. 2A-2B), or a cantilever C-clamp.

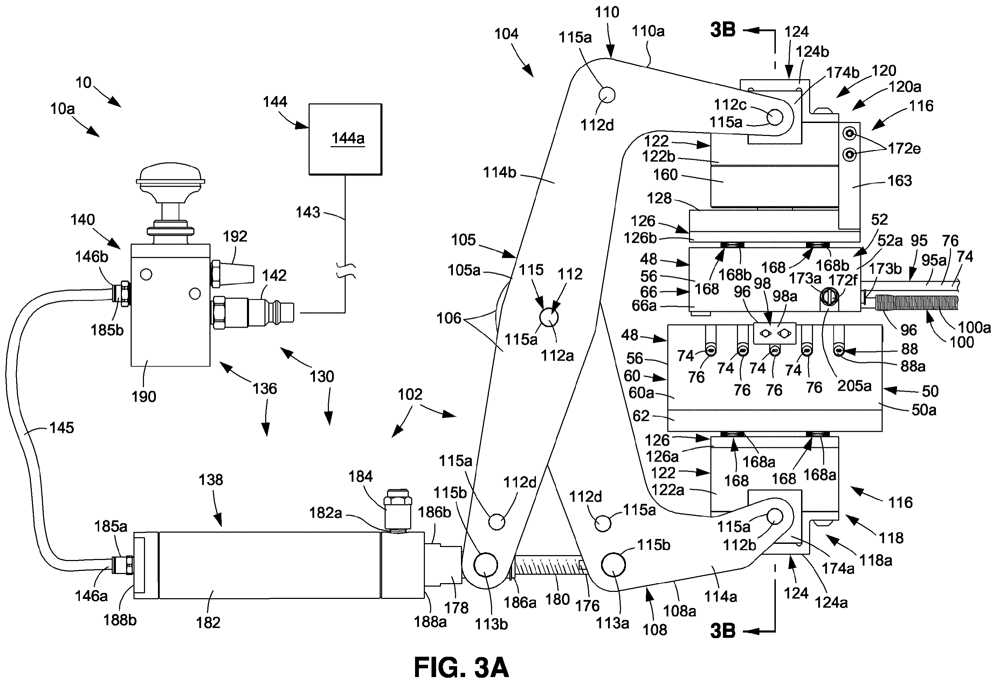

The clamp device 105 has clamp jaws (CJ) 106 (see FIGS. 1, 3A), such as two clamp jaws 106. The clamp jaws 106 comprise a first clamp jaw (CJ) 108 (see FIGS. 1, 2A-2B, 3A), such as a lower clamp jaw 108a (see FIGS. 2A-2B), or bottom clamp jaw, and a second clamp jaw (CJ) 110 (see FIGS. 1, 2A-2B, 3A), such as an upper clamp jaw 110a (see FIGS. 2A-2B, 3A), or top clamp jaw. As shown in FIGS. 3A-3E, the first clamp jaw 108 and the second clamp jaw 110 are pivotably coupled, or attached, via a pin 112, such as a first pivot pin 112a, inserted through holes 115, such as clamp jaw holes 115a, formed through the first clamp jaw 108 and the second clamp jaw 110.

As further shown in FIGS. 2A-2B, 3A-3E, the first clamp jaw 108, such as the lower clamp jaw 108a, comprises two frame portions 114a, such as L-shaped frame portions, that are preferably the same shape and size, and the second clamp jaw 110, such as the upper clamp jaw 110a, comprises two frame portions 114b, such as L-shaped frame portions, that are preferably the same shape and size. As shown in FIGS. 3A-3E, the frame portions 114a of the first clamp jaw 108 are attached parallel to each other via a second pivot pin 112b inserted through clamp jaw holes 115a parallel to each other, and via a fixed pin 112d inserted through clamp jaw holes 115a parallel to each other. As further shown in FIGS. 3A-3E, the frame portions 114b of the second clamp jaw 110 are attached parallel to each other via a third pivot pin 112c inserted through clamp jaw holes 115a parallel to each other, and via fixed pins 112d inserted through clamp jaw holes 115a parallel to each other. As further shown in FIGS. 3A-3E, the frame portions 114a of the first clamp jaw 108 have clamp jaw holes 115b parallel to each other with a first clamp fitting 113a inserted through the clamp jaw holes 115b. As further shown in FIGS. 3A, 3C-3E, the frame portions 114b of the second clamp jaw 108 have clamp jaw holes 115b parallel to each other with a second clamp fitting 113b, such as a knuckle clamp fitting, inserted through the clamp jaw holes 115b.

FIGS. 2A-2B show, in one version, the second clamp jaw 110 having frame portions 114b each with a longer length than the frame portions 114a of the first clamp jaw 108. In other versions, the frame portions 114b of the second clamp jaw 110 may have a shorter length, or an equal length, to the frame portions 114a of the first clamp jaw 108.

As shown in FIGS. 2A-2B, the clamp assembly 104 further comprises clamp jaw assemblies 116. The clamp jaw assemblies 116 comprise a first clamp jaw assembly (ASSY.) (CJA) 118 (see FIGS. 1, 2A-2B), such as a lower clamp jaw assembly 118a (see FIGS. 2A-2B), or bottom clamp jaw assembly, and a second clamp jaw assembly (CJA) 120 (see FIGS. 1, 2A-2B), such as an upper clamp jaw assembly 120a (see FIGS. 2A-2B), or top clamp jaw assembly.

As further shown in FIGS. 2A-2B, the first clamp jaw 108 is coupled, or attached, to the first clamp jaw assembly 118, and the second clamp jaw 110 is coupled, or attached, to the second clamp jaw assembly 120. The first clamp jaw assembly 118 is positioned separate from, and opposite to, the second clamp jaw assembly 120, in use.

In one version, as shown in FIGS. 3A-3E, the clamp jaw assemblies 116 each comprise an anvil jaw 122, an anvil strap 124 attached to the anvil jaw 122, and a trap bar 126 having two or more trap bar holes 115c (see FIG. 3C). In particular, the first clamp jaw assembly 118 has a first anvil jaw 122a (see FIG. 3A), or bottom anvil jaw, a first anvil strap 124a (see FIG. 3A), or bottom anvil strap, attached to the first anvil jaw 122a, and a first trap bar 126a (see FIG. 3A), or bottom trap bar, attached to the first anvil jaw 122a. In particular, the second clamp jaw assembly 120 has a second anvil jaw 122b (see FIG. 3A), or top anvil jaw, a second anvil strap 124b (see FIG. 3A), or top anvil strap, attached to the second anvil jaw 122b, and a second trap bar 126b (see FIG. 3A), or top trap bar, attached to a load bar 128 (see FIG. 3A), discussed in further detail below.

As shown in FIGS. 1, 2A-2B, 3A, 3E, the clamp assembly 104 further comprises an actuator assembly (ASSY.) (AA) 130 coupled, or attached, to the clamp device 105. The actuator assembly 130 is configured to move, and moves, the clamp device 105, including the clamp jaws 106, such as the first clamp jaw 108 and the second clamp jaw 110, with the attached clamp jaw assemblies 116, between an open position 132 (see FIG. 1) and a closed position 134 (see FIG. 1). During the thermoplastic welding 20, such as the conduction welding 22, and during the thermal welding cycle 75 (see FIG. 1) of the welding process 23 (see FIG. 1), the clamp device 105, including the clamp jaws 106 with the attached clamp jaw assemblies 116 are in the closed position 134.

In one version, as shown in FIGS. 1, 2A-2B, the actuator assembly 130 comprises an air cylinder actuator assembly (AA) 136. As shown in FIGS. 2A-2B, 3A, the air cylinder actuator assembly 136 comprises an air cylinder assembly 138 coupled, or attached, to the clamp device 105. In particular, as shown in FIGS. 2A-2B, the air cylinder assembly 138 is coupled, or attached, to portions of both the first clamp jaw 108 and the second clamp jaw 110 at the base of the clamp device 105. As shown in FIGS. 2A-2B, 3A, the air cylinder actuator assembly 136 further comprises a valve assembly 140 having a quick disconnect coupling 142 configured to be attached, and attached, to an air line 143, which, in turn, is plugged into, or attached to, an air supply 144 of pressurized air 144a, such as compressed air. As shown in FIGS. 2A-2B, 3A, the air cylinder actuator assembly 136 further comprises an air tubing line 145 having a first end 146a connected to the air cylinder assembly 138, and having a second end 146b connected to the valve assembly 140.

When activated, the pressurized air 144a is delivered through the air line 143, through the valve assembly 140, through the air tubing line 145, through the air cylinder assembly 138, and to the clamp device 105 to deliver pneumatic air pressure to the clamp device 105, to cause the clamp device 105, including the clamp jaws 106 and the clamp jaw assemblies 116, to move from the open position 132 to the closed position 134, and to close the clamp device 105, including the clamp jaws 106 and the clamp jaw assemblies 116, and to apply pressure 32 (see FIG. 1) to the thermoplastic composite parts 24 to be welded together. The pressurized air 144a, such as compressed air, powers the closing of the clamp device 105, including the clamp jaws 106 and the clamp jaw assemblies 116, and the clamping of the thermoplastic composite parts 24 against each other. In one version, the pressurized air 144a, such as compressed air, may have a air pressure (see FIG. 1) of 758 kPa (110 psi ,one-hundred ten pounds per square inch). In other versions, the pressurized air 144a, such as the compressed air, may have another suitable air pressure.

The air cylinder actuator assembly 136 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are completed, the pressurized air 144a, such as the compressed air, is turned off, and the clamp device 105, including the clamp jaws 106 with the attached clamp jaw assemblies 116, are able to move from the closed position 134 back to the open position 132.

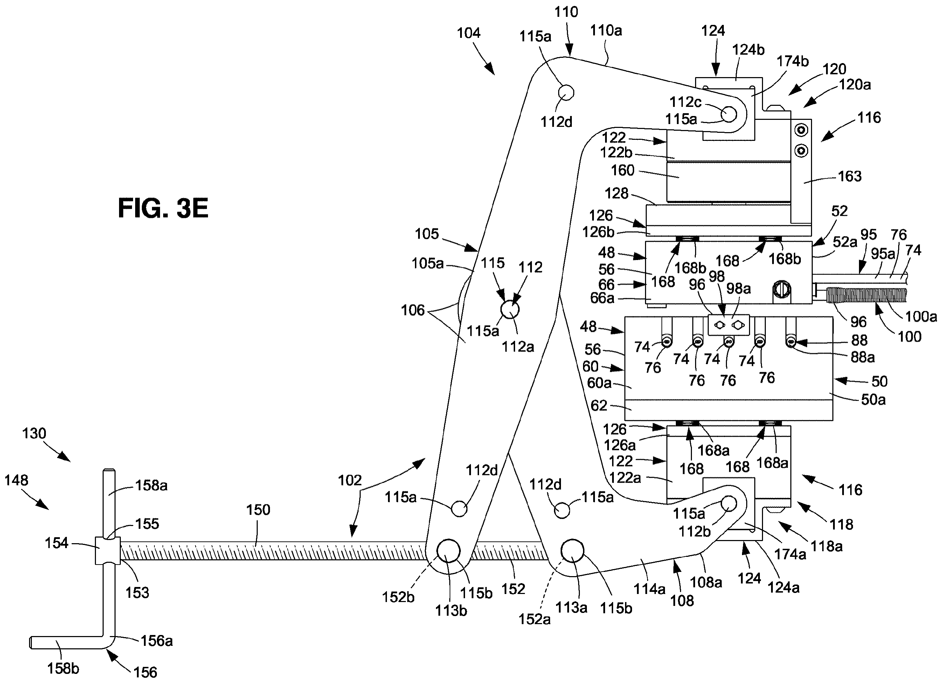

In another version, as shown in FIGS. 1, 3E, the actuator assembly 130 comprises a threaded screw rod actuator assembly (AA) 148. As shown in FIG. 3E, the threaded screw rod actuator assembly 148 comprises a threaded screw rod 150 having a first end 152a coupled to the clamp device 105, and having a second end 152b with a cylindrical collar 154 and a through opening 155 through the cylindrical collar 154. In particular, as shown in FIG 3E, the first end 152a of the threaded screw rod 150 is coupled, or attached, to portions of both the first clamp jaw 108 and the second clamp jaw 110 at the base of the clamp device 105. As shown in FIG. 3E, the threaded screw rod actuator assembly 148 further comprises a handle 156, such as an L-shaped handle 156a, having a first portion 158a, and a second portion 158b forming a ninety degree angle with respect to the first portion 158a. As shown in FIG. 3E, the first portion 158a has a length that is greater than a length of the second portion 158b. As further shown in FIG. 3E, the first portion 158a is inserted through the through opening 155 of the cylindrical collar 154.

In order to cause the clamp device 105, including the clamp jaws 106 and the clamp jaw assemblies 116, to move from the open position 132 to the closed position 134, the handle 156 is rotated in a first rotation direction to, in turn, rotate the threaded screw rod 150 in the first rotation direction, and to actuate and to cause the threaded screw rod 150 to advance toward the clamp device 105 in a linear actuation direction. The threaded screw rod 150 is advanced in the linear actuation direction, to cause the clamp device 105, including the clamp jaws 106 and the clamp jaw assemblies 116, to move from the open position 132 to the closed position 134, until the clamp device 105, including the clamp jaws 106 and the clamp jaw assemblies 116, is closed, and pressure 32 (see FIG. 1) is applied to the thermoplastic composite parts 24 to be welded together.

The threaded screw rod actuator assembly148 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are completed, the handle 156 is turned in a second rotation direction opposite the first rotation direction, to rotate the threaded screw rod 150 in the second rotation direction, and to cause the threaded screw rod 150 to move away from the clamp device 105, to release the clamp device 105, and to cause the clamp device 105, including the clamp jaws 106 with the attached clamp jaw assemblies 116, to move from the closed position 134 back to the open position 132.

As shown in FIGS. 1, 2-2B, the force application and monitoring system 102 further comprises a load cell 160. As shown in FIGS. 2A-2B, the load cell 160 is coupled to the clamp assembly 104, and is preferably coupled to the second clamp jaw assembly 120, such as the upper clamp jaw assembly 120a. The load cell 160 is configured to monitor, and monitors a force 162 (see FIGS. 1, 3B) applied by the clamp assembly 104 to the thermoplastic composite parts 24 (se FIG. 3B), such as to the first thermoplastic composite part 24a (see FIG. 3B) and to the second thermoplastic composite part 24b (see FIG. 3B). The second clamp jaw assembly 120, such as the upper clamp jaw assembly 120a, may further comprise the load bar 128 (see FIGS. 1, 2A, 3A, 3C) coupled to the load cell 160. The second clamp jaw assembly 120, such as the upper clamp jaw assembly 120a, may further comprise one or more centering bars 163 (see FIGS. 1, 2A, 3A, 3C) coupled to the load bar 128. The one or more centering bars 163 are optional, and are used to keep the second clamp jaw assembly 120 (see FIG. 3C) from spinning about a bolt 164 (see FIG. 3B), such as a first load cell bolt 164a (see FIG. 3B) that attaches the load bar 128 (see FIG. 3B) to the load cell 160 (see FIG. 3B).

As shown in FIGS. 2A-2B, the load cell 160 is attached to a plug 94 (see also FIG. 3B) comprising an connector element 90 that is attached to the controller 85. The load cell 160 is powered with the power supply 86 (see FIGS. 2A-2B), such as the electrical power supply 86a (see FIGS. 2A-2B), of the controller 85.

In one version, the load cell 160 is a low profile, disk-shaped or pancake type load cell. As shown in FIG. 3C, the load cell 160 has a body 165 with load cell outer holes 115d formed through the outer diameter of the body 165 to receive second load cell bolts 164b and with a load cell center hole 115e (see also FIG. 3B), such as a threaded hole, formed through the center of the body 165 to receive the first load cell bolt 164a. The body 165 is a durable housing that supports internal components of the load cell 160.

Preferably, the load cell 160 is made of a metal material 72 (see FIG. 1), such as stainless steel 72a (see FIG. 1), steel 72b (see FIG. 1), aluminum 72c (see FIG. 1), or another suitable metal material 72. As used herein, "load cell" means a transducer that converts mechanical force into electrical signals and is comprised of a strain gauge, e.g., a pivotal sensor detecting deformation caused by the applied force applied, and wiring, such as electrical conductors that connect the strain gauge to a load cell circuitry that amplifies a signal from the strain gauge for accurate readouts.

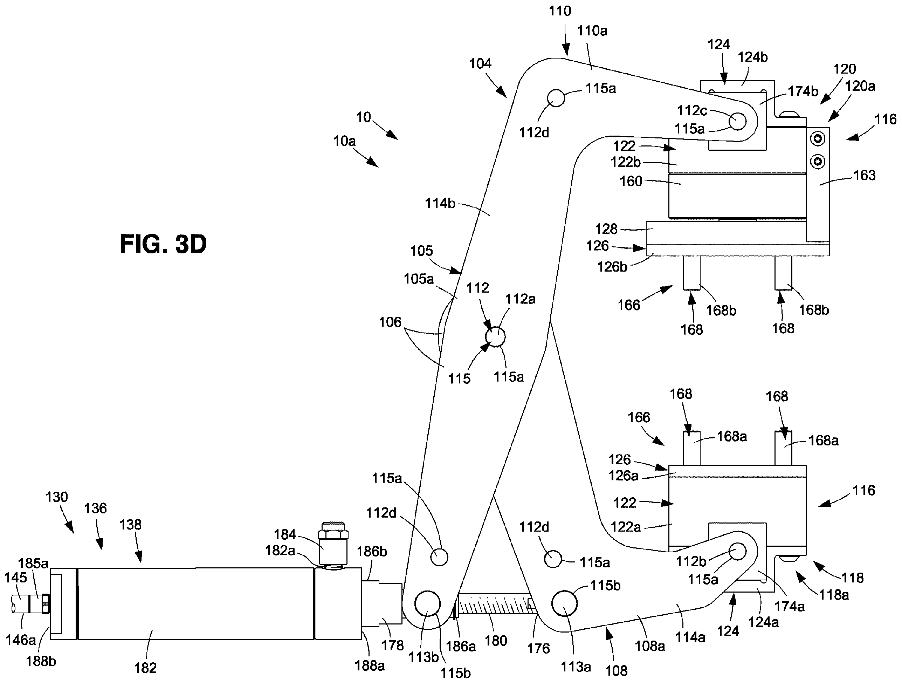

As shown in FIGS. 1, 3C, 3D, the portable conduction welding apparatus 10 further comprises an indexing assembly (ASSY.) 166 coupled to the clamp assembly 104. As further shown in FIGS. 1, 3C, 3D, the indexing assembly 166 (see FIGS. 1, 3D) comprises a plurality of indexing pins 168. The plurality of indexing pins 168 comprise a plurality of first indexing pins 168a (see FIGS. 1, 2A, 3D), such as bottom indexing pins, and a plurality of second indexing pins 168b (see FIGS. 1, 2B, 3D), such as top indexing pins. In one version, as shown in FIGS. 3C, 3D, the plurality of indexing pins 168 comprise two first indexing pins 168a and two second indexing pins 168b. In other versions, the number of first indexing pins 168a may be more than two, and the number of second indexing pins 168b may be more than two.

As shown in FIG. 3C, each indexing pin 168 has a head portion 170a and a body portion 170b. Each indexing pin 168 is preferably in the form of a metal pin, a metal pin with an insulated exterior or insulated portions, or another suitable type of indexing pin 168. Each indexing pin 168 is preferably a metal material 72 (see FIG. 1), such as stainless steel 72a (see FIG. 1), steel 72b (see FIG. 1), aluminum 72c (see FIG. 1), or another suitable metal material 72.

As shown in FIG. 3D, the first indexing pins 168a are coupled, or attached, to the first clamp jaw assembly 118, such as the lower clamp jaw assembly 118a, and the second indexing pins 168b are coupled, or attached, to the second clamp jaw assembly 120, such as the upper clamp jaw assembly 120a. As shown in FIG. 3C, the first heater assembly 50, such as the lower heater assembly 50a, is indexed, or aligned, to the first clamp jaw assembly 118, such as the lower clamp jaw assembly 118a, with the two first indexing pins 168a. As shown in FIG. 3C, the head portion 170a of each first indexing pin 168a is inserted in a portion of the first anvil jaw 122a, a portion of the body portion 170b is inserted through the first trap bar 126a, another portion of the body portion 170b is inserted through the bottom cap portion 62 of the first machined insulation block 60, and another portion of the body portion 170b, such as a tail portion, is inserted in a portion of the first machined heater block 64. Thus, the first indexing pins 168a align the first machined heater block 64 and the first machined insulation block 60 with the first anvil jaw 122a and the first trap bar 126a of the first heater assembly 50.

As further shown in FIG. 3C, the second heater assembly 52, such as the upper heater assembly 52a, is indexed, or aligned, to the second clamp jaw assembly 120, such as the upper clamp jaw assembly 120a, with the two second indexing pins 168b. As shown in FIG. 3C, the head portion 170a of each second indexing pin 168b is inserted in a portion of the load bar 128, a portion of the body portion 170b is inserted through the second trap bar 126b, another portion of the body portion 170b is inserted through the second machined insulation block 66, and another portion of the body portion 170b, such as a tail portion, is inserted in a portion of the second machined heater block 68. Thus, the second indexing pins 168b align the second machined heater block 68 and the second machined insulation block 66 with the load bar 128 and the second trap bar 126b of the second heater assembly 52.

In other versions, the first heater assembly 50 may be indexed to the first clamp jaw assembly 118 with more than two first indexing pins 168. In other versions, the second heater assembly 52 may be indexed to the second clamp jaw assembly 120 with more than two second indexing pins 168.

As shown in FIG. 1, the portable conduction welding apparatus 10 further comprises one or more controllers 85 having one or more power supplies (PS) 86, such as one or more electrical (ELECT.) power supplies (PS) 86a. The one or more controllers 85 may be connected to various parts or components of the portable conduction welding apparatus 10, such as connected to the heater elements 74, the thermocouples 96, and the load cell 160, via one or more connector elements 90 (see FIGS. 2A-2B), such as one or more electrical wires 92 (see FIGS. 1, 2A-2B), one or more plugs 94 (see FIGS. 1, 2A-2B), or one or more other suitable connector elements, such as electrical connector elements. The heater elements 74, the thermocouples 96, and the load cell 160 are powered with the one or more power supplies 86, such as the one or more electrical power supplies 86a, of the controller 85.

The portable conduction welding apparatus 10, such as the portable conduction welding tool 10a (see FIG. 1), is portable and is configured to weld together at a weldline 28a (see FIGS. 1, 11), the first thermoplastic composite part 24a (see FIGS. 1, 11) aligned to the first heater assembly 50 (see FIGS. 1, 11) and the second thermoplastic composite part 24b (see FIGS. 1, 11) aligned to the second heater assembly 52 (see FIGS. 1, 11), when the first heater assembly 50 and the second heater assembly 52 are indexed to the clamp assembly 104 (see FIGS. 1, 11), and the clamp device 105 (see FIGS. 1, 11) is in the closed position 134 (see FIGS. 1, 11), by applying the force 162 from the clamp assembly 104 on the weldline 28a, and conducting the heat 30 (see FIG. 1) from the one or more heater elements 74 (see FIGS. 1, 11) at the weldline 28a during the thermal welding cycle 75 (see FIG. 1), to melt thermoplastic composite material 25 (see FIG. 1) of the first thermoplastic composite part 24a and the second thermoplastic composite part 24b at the weldline 28a, to obtain welded thermoplastic composite parts 24c (see FIGS. 1, 11).

Now referring to FIGS. 3A-3E, FIGS. 3A-3D show a portable conduction welding apparatus 10, such as a portable conduction welding tool 10a, with one version of an actuator assembly 130 in the form of an air cylinder actuator assembly 136, and FIG. 3E shows a portable conduction welding apparatus 10, such as a portable conduction welding tool 10a, with another version of an actuator assembly 130, in the form of a threaded screw rod actuator assembly 148. FIG. 3A is an illustration of a right side view of an exemplary version of the portable conduction welding apparatus 10, such as the portable conduction welding tool 10a, of the disclosure with the actuator assembly 130, in the form of the air cylinder actuator assembly 136. FIG. 3B is an illustration of a cross-sectional front view of the portable conduction welding apparatus 10, such as the portable conduction welding tool 10a, taken along lines 3B-3B, of FIG. 3A, and showing the addition of a first thermoplastic composite part 24a aligned to a first heater assembly 50, and a second thermoplastic composite part 24b aligned to a second heater assembly 52 in a thermal welding cycle configuration 75a. FIG. 3C is an illustration of a cross-sectional right side view of the portable conduction welding apparatus 10, such as a portable conduction welding tool 10a, of FIG. 3A, and showing a partial actuator assembly 130, in the form of a partial air cylinder actuator assembly 136. FIG. 3D is an illustration of a right side view of the portable conduction welding apparatus 10, such as a portable conduction welding tool 10a, of FIG. 3A, where the heating system 46 has been removed, and showing a partial actuator assembly 130 in the form of a partial air cylinder actuator assembly 136. FIG. 3E is an illustration of a right side view of another exemplary version of a portable conduction welding apparatus 10, such as a portable conduction welding tool 10a, of the disclosure with another version of the actuator assembly 130, in the form of the threaded screw rod actuator assembly 148.

FIGS. 3A-3E show the force application and monitoring system 102 (see FIGS. 3A, 3) with the clamp assembly 104 comprising the clamp device 105, such as in the form of the pivot C-clamp 105a, or a cantilever C-clamp, with clamp jaws 106 (see FIGS. 3A, 3D-3E) comprising the first clamp jaw 108, such as the lower clamp jaw 108a, or bottom clamp jaw, and the second clamp jaw 110, such as the upper clamp jaw 110a, or top clamp jaw. As shown in FIGS. 3A, 3C-3E, the first clamp jaw 108 and the second clamp jaw 110 are pivotably coupled, or attached, via the pin 112, such as the first pivot pin 112a, inserted through holes 115, such as clamp jaw holes 115a, formed through the first clamp jaw 108 and the second clamp jaw 110.

FIGS. 3A-3E further show the frame portions 114a of the first clamp jaw 108 attached via the second pivot pin 112b inserted through clamp jaw hole 115a, attached via the fixed pin 112d (see FIGS. 3A, 3C-3E) inserted through clamp jaw hole 115a (see FIGS. 3A, 3C-3E), and attached via the first clamp fitting 113a inserted through the clamp jaw hole 115b.

FIGS. 3A-3E further show the frame portions 114b of the second clamp jaw 110 attached via the third pivot pin 112c inserted through clamp jaw hole 115a, attached via fixed pins 112d (see FIGS. 3A, 3C-3E) inserted through clamp jaw holes 115a (see FIGS. 3A, 3C-3E), and attached via the second clamp fitting 113b (see FIGS. 3A, 3C-3E), such as the knuckle clamp fitting, inserted through the clamp jaw hole 115b (see FIGS. 3A, 3C-3E).

FIGS. 3A-3E further show the clamp jaw assemblies 116 (see FIGS. 3A, 3D-3E) with the first clamp jaw assembly 118, such as a lower clamp jaw assembly 118a, or bottom clamp jaw assembly, and the second clamp jaw assembly 120, such as the upper clamp jaw assembly 120a, or top clamp jaw assembly. FIGS. 3A-3E further show the anvil jaws 122, such as the first anvil jaw 122a, or bottom anvil jaw, and the second anvil jaw 122b, or ), or top anvil jaw, further show the anvil straps 124, such as the first anvil strap124a, or bottom anvil strap, and the second anvil strap 124b, or top anvil strap, and further show the trap bars 126, such as the first trap bar 126a, or bottom trap bar, and the second trap bar 126b, or top trap bar.

FIG. 3C shows the first anvil strap 124a attached to the first anvil jaw 122a with two screws 172, such as two cap screws 172a, inserted through anvil strap holes 115f and anvil jaw holes 115g, and shows the second anvil strap 124b attached to the second anvil jaw 122a with two screws 172, such as two cap screws 172a, inserted through anvil strap holes 115f and anvil jaw holes 115g.

FIG. 3C further shows the first trap bar 126a attached to the first anvil jaw 122a with two flathead cap screws 172b inserted through trap bar holes 115c, through anvil jaw holes 115h, and through portions of the first block member 174a. FIG. 3C further shows the second trap bar 126b attached to the load bar 128 (see also FIGS. 3A-3E) with two flathead cap screws 172c inserted through trap bar holes 115c and first load bar holes 115i.

FIGS. 3A-3E further show the load cell 160. FIGS. 3B, 3C show the load cell 160 attached to the load bar 128 via the bolt 164, such as the first load cell bolt 164a, inserted through a second load bar hole 115j and inserted through the load cell center hole 115e. FIG. 3C further shows the load cell 160 attached to the second anvil jaw 122b via the two second load cell bolts 164b inserted through the load cell 160 and through anvil jaw holes 115k in the second anvil jaw 112b. FIG. 3B shows the plug 94 attached to the load cell 160.

FIGS. 3A-3E further show a first block member 174a fitted between the first anvil strap 124a and the first anvil jaw 122a, and having the second pivot pin 112b inserted through the clamp jaw holes 115a of the frame portions 114a and inserted through a through opening 175a (see FIGS. 3B, 3) of the first block member 174a, so that the first block member 174a is positioned between the frame portions 114a of the first clamp jaw 108.

FIGS. 3A-3E further show a second block member 174b fitted between the second anvil strap 124b and the second anvil jaw 122b, and having the third pivot pin 112c inserted through the clamp jaw holes 115a of the frame portions 114b and inserted through a through opening 175b (see FIGS. 3B, 3C) of the second block member 174b, so that the second block member 174b is positioned between the frame portions 114b of the second clamp jaw 110. FIG. 3C further shows the second anvil jaw 122b attached to the second block member 174b via two set screws 172d inserted through anvil jaw holes 115l and portions of the second block member 174b.

FIGS. 3A, 3D-3E further show the centering bar 163 attached to the first anvil jaw 122a with two button head cap screws 172e (see FIG. 3A). The one or more centering bars 163 (see FIGS. 2A, 3A) are optional, and are used to keep the second clamp jaw assembly 120 (see FIG. 3C) from spinning about a bolt 164 (see FIG. 3C), such as a first load cell bolt 164a (see FIG. 3C), that attaches the load bar 128 (see FIG. 3C) to the load cell 160 (see FIG. 3C).

FIG. 3A further shows a first ring terminal 173a and a ground screw 172f inserted in a first cut-out 205a (see also FIG. 5A) of the second machined insulation block 66a. FIG. 3A further shows a second ring terminal 173b inserted in a first portion 205c (see FIG. 5A) of a second cut-out 205b (see FIG. 5A).

FIG. 3D further shows the indexing assembly 166, and FIGS. 3A-3E show the indexing pins 168, such as two first indexing pins 168a, or bottom indexing pins, attached to the first trap bar 126a, of the lower clamp jaw assembly 118a, and such as the two second indexing pins 168b, or top indexing pins, attached to the second trap bar 126b, of the upper clamp jaw assembly 120a.

As shown in FIG. 3C, each indexing pin 168 has the head portion 170a and the body portion 170b. As further shown in FIG. 3C, the head portion 170a of each of the first indexing pins 168a is inserted in anvil jaw holes 115m of the first anvil jaw 122a, a portion of the body portion 170b of each of the first indexing pins 168a is inserted through trap bar holes 115c of the first trap bar 126a, another portion of the body portion 170b of each of the first indexing pins 168a is inserted through insulation block holes 115n of the first machined insulation block 60, and another portion of the body portion 170b, such as a tail portion, of each of the first indexing pins 168a, is inserted in heater block holes 115o the first machined heater block 64.

As further shown in FIG. 3C, the head portion 170a of each of the second indexing pins 168b is inserted in third load bar holes 115p of the load bar 128, a portion of the body portion 170b of each of the first indexing pins 168a is inserted through trap bar holes 115c of the second trap bar 126b, another portion of the body portion 170b of each of the second indexing pins 168b is inserted through insulation block holes 115n of the second machined insulation block 66, and another portion of the body portion 170b of each of the second indexing pins 168b, such as a tail portion, is inserted in a heater block holes 115o of the second machined heater block 68.

FIGS. 3A-3C, 3E show the heating system 46 (see FIG. 3A) having the heater assemblies 48 (see FIGS. 3A, 3E) comprising the first heater assembly 50, such as the lower heater assembly 50a, or bottom heater assembly, and the second heater assembly 52, such as the upper heater assembly 52a, or top heater assembly. FIGS. 3A-3C, 3E further show the machined insulation blocks 56 (see FIGS. 3A, 3B, 3E) comprising the first machined insulation block 60, such as the lower machined insulation block 60a, or bottom machined insulation block, with the bottom cap portion 62, and the second machined insulation block 66, such as the upper machined insulation block 66a, or top machined insulation block. FIG. 3B further shows the machined insulation block interior 56a of the first machined insulation block 60.

FIGS. 3B-3C further show the machined heater blocks 58 comprising the first machined heater block 64, such as the lower machined heater block 64a, or bottom machined heater block, positioned within the first machined insulation block 60, and the second machined heater block 68, such as the upper machined heater block 68a, or top machined heater block, positioned within the second machined insulation block 66.

FIGS. 3A-3C, 3E further show heater elements 74, such as cartridge heaters 76, comprising first heater elements 88, such as lower heater elements 88a, or bottom heater elements, coupled to the first machined heater block 64 (see FIGS. 3B, 3C), and a second heater element 95, such as an upper heater element 95a, or top heater element, coupled to the second machined heater block 68 (see FIGS. 3B, 3). As shown in FIGS. 3B, 3C, the cartridge heater 76 comprises heating wires 77 in a metal sleeve 80 and lead wires 78 with a lead wire covering 81. FIGS. 3A, 3C, 3E show five (5) first heater elements 88, such as five (5) lower heater elements 88a, coupled to the first heater assembly 50, such as the lower heater assembly 50a. However, the number of first heater elements 88, such as lower heater elements 88a, may be one (1) to four (4), or greater than five (5). FIGS. 3A, 3C, 3E show one (1) second heater element 95, such as one (1) upper heater element 95a, coupled to the second heater assembly 52, such as the upper heater assembly 52a. However, the number of second heater elements 95, such as upper heater elements 95a, may be greater than one (1).

FIGS. 3A-3C, 3E further show thermocouples 96 coupled to the machined heater block 58 (see FIGS. 3B, 3C), where the thermocouples 96 comprise the first thermocouple 98 (see FIGS. 3A-3B, 3E), such as the lower thermocouple 98a (see FIGS. 3A-3B, 3E), or bottom thermocouple, and the second thermocouple 100 (see FIGS. 3A, 3C, 3E), such as the upper thermocouple 100a (see FIGS. 3A, 3C, 3E), or top thermocouple.

As further shown in FIGS. 2A-2B, the first thermocouple 98, such as the lower thermocouple 98a, and the second thermocouple 100, such as the upper thermocouple 100a, are each attached via a connector element 90, such as a plug 94, to the controller 85 having the power supply 86, such as the electrical power supply 86a. As shown in FIGS. 2A-2B, the first thermocouple 98 and the second thermocouple 100, and the first heater elements 88 and the second heater elements 95, are powered with the power supply 86, such as the electrical power supply 86a.

FIGS. 3A, 3D, show the actuator assembly 130, in the form of the air cylinder actuator assembly 136. As shown in FIGS. 3A, 3D, the air cylinder actuator assembly 136 comprises the air cylinder assembly 138 comprising a cylinder nose 176, a cylinder adapter 178, a cylinder extension portion 180 between the cylinder nose 176 and the cylinder adapter 178, and an air cylinder 182, with an exhaust valve 184 and a straight fitting 185a. As shown in FIGS. 3A, 3D, the cylinder adapter 178 has a first end 186a attached to the cylinder extension portion 180 and has a second end 186b attached to a first end 188a of the air cylinder 182. As further shown in FIGS. 3A, 3D, the air cylinder 182 has a second end 188b attached to the straight fitting 185a. The air cylinder 182 has the exhaust valve 184 (see FIGS. 3A, 3D) attached to an air cylinder exterior portion 182a (see FIGS. 3A, 3D).

As shown in FIGS. 3A, 3C, 3D, the air cylinder assembly 138 of the air cylinder actuator assembly 136 is coupled, or attached, to the clamp device 105, and in particular, is coupled, or attached to the first clamp jaw 108 via the first clamp fitting 113a attached to the cylinder nose 176, and is coupled, or attached to the second clamp jaw 110 via the second clamp fitting 113b attached to the cylinder adapter 178.

As shown in FIG. 3A, the air cylinder actuator assembly 136 further comprises a valve assembly 140 having a quick disconnect coupling 142 configured to be attached, and attached, to an air line 143, which, in turn, is plugged into, or attached to, an air supply 144 of pressurized air 144a, such as compressed air. As shown in FIG. 3A, the valve assembly 140 further comprises a straight fitting 185b, a directional valve 190, and a muffler 192.

As shown in FIG. 3A, the air cylinder actuator assembly 136 further comprises an air tubing line 145 (see also FIG. 3D) having a first end 146a (see also FIG. 3D) connected to the straight fitting 185a of the air cylinder 182 of the air cylinder assembly 138, and having a second end 146b connected to the straight fitting 185b of the valve assembly 140.

When activated, the pressurized air 144a is delivered through the air line 143, through the valve assembly 140, through the air tubing line 145, through the air cylinder assembly 138, and to the clamp device 105 to deliver pneumatic air pressure to the clamp device 105, to cause the clamp device 105, including the clamp jaws 106 and the clamp jaw assemblies 116, to move from the open position 132 (see FIG. 1) to the closed position 134 (see FIG. 1), and to close the clamp device 105, including the clamp jaws 106 and the clamp jaw assemblies 116, and to apply pressure 32 (see FIG. 1) to the thermoplastic composite parts 24 (see FIG. 3B) to be welded together. The pressurized air 144a, such as compressed air, powers the closing of the clamp device 105, including the clamp jaws 106 and the clamp jaw assemblies 116, and the clamping of the thermoplastic composite parts 24 against each other. In one version, the pressurized air 144a, such as compressed air, may have a air pressure (see FIG. 1) of 758 kPa (110 psi, one-hundred ten pounds per square inch). In other versions, the pressurized air 144a, such as the compressed air, may have another suitable air pressure.

In another version, as shown in FIG. 3E, the actuator assembly 130 comprises a threaded screw rod actuator assembly 148. As shown in FIG. 3E, the threaded screw rod actuator assembly 148 comprises a threaded screw rod 150 having a first end 152 coupled to the clamp device 105, and having a second end 153 with a cylindrical collar 154 having a through opening 155 through the cylindrical collar 154. In particular, as shown in FIG 3E, a first portion 152a of the first end 152 of the threaded screw rod 150 is coupled, or attached, to the first clamp jaw 108 via the first clamp fitting 113a attached to the first portion 152a, and a second portion 152b of the first end 152 of the threaded screw rod 150 is coupled, or attached, to the second clamp jaw 110 via the second clamp fitting 113b attached to the second portion 152b.

As shown in FIG. 3E, the threaded screw rod actuator assembly 148 further comprises a handle 156, such as an L-shaped handle 156a, having a first portion 158a, and a second portion 158b forming a ninety degree angle with respect to the first portion 158a. As shown in FIG. 3E, the first portion 158a has a length that is greater than a length of the second portion 158b. As further shown in FIG. 3E, the first portion 158a is inserted through the through opening 155 of the cylindrical collar 154.

In order to cause the clamp device 105, including the clamp jaws 106 and the clamp jaw assemblies 116, to move from the open position 132 to the closed position 134, the handle 156 is rotated in a first rotation direction to, in turn, rotate the threaded screw rod 150 in the first rotation direction, and to actuate and to cause the threaded screw rod 150 to advance toward the clamp device 105 in a linear actuation direction. The threaded screw rod 150 is advanced in the linear actuation direction, to cause the clamp device 105, including the clamp jaws 106 and the clamp jaw assemblies 116, to move from the open position 132 to the closed position 134, until the clamp device 105, including the clamp jaws 106 and the clamp jaw assemblies 116, is closed, and pressure 32 (see FIG. 1) is applied to the thermoplastic composite parts 24 to be welded together.

The threaded screw rod actuator assembly148 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are complete, the handle 156 is turned in a second rotation direction opposite the first rotation direction, to rotate the threaded screw rod 150 in the second rotation direction, and to cause the threaded screw rod 150 to move away from the clamp device 105, to release the clamp device 105, and to cause the clamp device 105, including the clamp jaws 106 with the attached clamp jaw assemblies 116, to move from the closed position 134 back to the open position 132.

As shown in FIG. 3B, thermoplastic composite parts 24 are aligned and positioned in the portable conduction welding apparatus 10, such as the portable conduction welding tool 10a, in a thermal welding cycle configuration 75a, such as during a thermal welding cycle 75 (see FIG. 1) of thermoplastic welding 20 (see FIG. 1), such as conduction welding 22 (see FIG. 1). FIG. 3B shows a first thermoplastic composite part 24a aligned to the first heater assembly 50, and a second thermoplastic composite part 24b aligned to the second heater assembly 52 in the thermal welding cycle configuration 75a. FIG. 3B shows contact the first contact interface 26a of the first thermoplastic composite part 24a and the second contact interface 26b of the second thermoplastic composite part 24b. FIG. 3B further shows the weldline 28a of the thermoplastic composite parts 24.

Now referring to FIG. 4A, FIG. 4A is an illustration of a right side bottom perspective view of an exemplary version of a machined heater block 58, such as the first machined heater block 64, for example, the lower machined heater block 64a, or bottom machined heater block, of the heater assembly 48 (see FIGS. 1, 3A), such as the first heater assembly 50 (see FIGS. 1, 3A), or lower heater assembly 50a (see FIGS. 1, 3). In one version, as shown in FIG. 4A, the machined heater block 58, such as the first machined heater block 64, for example, the lower machined heater block 64a, has an inverted truncated pyramid shape 194 with heater element through openings 195 (see also FIG. 3B) configured to receive the heater elements 74 (see FIGS. 3B, 3C), such as the cartridge heaters 76 (see FIGS. 3B, 3C), for example, the first heater elements 88. FIG. 4A shows five (5) heater element through openings 195. However, the first machined heater block 64 may have one (1) to four (4) heater element side through openings 195 of greater than five (5) heater element through openings 195 to accommodate a sufficient number of heater elements 74, such as cartridge heaters 76, depending on the size of the thermoplastic composite parts 24 to be welded.

As shown in FIG. 4A, the first machined heater block 64, for example, the lower machined heater block 64a, has a thermocouple opening 196 (see also FIG. 3B) configured to receive the thermocouple 96 (see FIG. 3B), such as the first thermocouple 98 (see FIG. 3B), for example, the lower thermocouple 98a (see FIG. 3B). As shown in FIG. 3B, the thermocouple opening 196 is formed through a portion of an interior width of the first machined heater block 64, while the heater element through opening 195 is formed through an entire width of the first machined heater block 64.

As shown in FIG. 4A, the first machined heater block 64, for example, the lower machined heater block 64a, further has two heater block holes 115o configured to receive the tail end portion of the body portion 170b (see FIG. 3C) of each of the first indexing pins 168a.

Now referring to FIG. 4B, FIG. 4B is an illustration of a top perspective view of an exemplary version of a machined insulation block 56, such as a first machined insulation block 60, for example, a lower machined insulation block 60a, or bottom machined insulation block, of the heater assembly 48 (see FIGS. 1, 3C), such as the first heater assembly 50 (see FIGS. 1, 3C), or lower heater assembly 50a (see FIGS. 1, 3A). In one version, as shown in FIG. 4B, the machined insulation block 56, such as the first machined insulation block 60, for example, the lower machined insulation block 60a, has a hollow block shape 197 and has the machined insulation block interior 56a that is hollow and is configured to hold and house the first machined heater block 64 (see FIG. 4A), when in use in the portable conduction welding apparatus 10.

As further shown in FIG. 4A, the first machined insulation block 60 has four (4) walls 198, with a first wall 198a having slots 200, such as five (5) slots 200, formed in a top edge of the first wall 198a. The slots 200 are configured to each receive a portion of the heater elements 74 (see FIGS. 2A, 3B), such as the cartridge heaters 76, so that the heater elements 74 can extend through the heater element through openings 195 (see FIG. 4A) of the first machined heater block 64a housed in the first machined insulation block 60, through the slots 200 of the first machined insulation block 60, and connect to the controller 85 (see FIG. 2A) and the power supply 86 (see FIG. 2A). As further shown in FIG. 4A, the first machined insulation block 60 has a second wall 198b with a first notch 202a formed in a top edge of the second wall 198b, and a third wall 198c with a second notch 202b formed in a top edge of the third wall 198c. The first notch 202a and the second notch 202b are configured to each receive a ring terminal 173 (see FIG. 2B), such as a ground screw 172f (see FIG. 3A).

As further shown in FIG. 4A, the first machined insulation block 60 has the bottom cap portion 62 with two insulation block holes 115n (see also FIG. 3C). The insulation block holes 115n are configured to each receive a body portion 170b (see FIG. 3C) of each of the two first indexing pins 168a (see FIG. 3C).

Now referring to FIG. 5A, FIG. 5A is an illustration of a front perspective view of an exemplary version of a machined insulation block 56, such as a second machined insulation block 66, for example, an upper machined insulation block 66a, or top machined insulation block, of the heater assembly 48 (see FIGS. 1, 3A), such as the second heater assembly 52 (see FIGS. 1, 3), or upper heater assembly 52a (see FIGS. 1, 3A).

In one version, as shown in FIG. 5A, the machined insulation block 56, such as the second machined insulation block 66, for example, the upper machined insulation block 66a, has a hollow block shape 197b and has the machined insulation block interior 56a that is hollow and is configured to hold and house the second machined heater block 68 (see FIG. 5B), when in use in the portable conduction welding apparatus 10. As further shown in FIG. 5A, the second machined insulation block 66, such as the upper machined insulation block 66a, has four (4) walls 204, with a first wall 204a having a first cut-out 205a, formed in a bottom edge of the first wall 204a, and a second wall 204b having a second cut-out 205b, formed in a bottom edge of the second wall 204b. The second cut-out 205b has a first portion 205c and a second portion 205d. The first cut-out 205a is configured to receive a first ring terminal 173a (see FIG. 3A) and a ground screw 172f (see FIG. 3A). The first portion 205c of the second cut-out 205b is configured to receive a second ring terminal 173b (see FIG. 3A). The second portion 205d of the second cut-out 205b is configured to receive the second heater element 95 (see FIG. 3C) of the second machined heater block 68 (see FIG. 3C), and is configured to receive the second thermocouple 100 of the second machined heater block 68.

As further shown in FIG. 5A, the second machined insulation block 66, such as the upper machined insulation block 66a, has a top side 206a with two insulation block holes 115n configured to receive portion of the body portion 170b of each of the two second indexing pins 168b (see FIG. 3C).

Now referring to FIG. 5B, FIG. 5B is an illustration of a front top perspective view of an exemplary version of a machined insulation block 56, such as the second machined heater block 68, for example, the upper machined heater block 68a, of the heater assembly 48 (see FIGS. 1, 3A), such as the second heater assembly 52 (see FIGS. 1, 3C), or lower heater assembly 52a (see FIGS. 1, 3C). In one version, as shown in FIG. 5B, the machined insulation block 56, such as the second machined insulation block 68, for example, the upper machined insulation block 68a, has a rectangular block shape 207 and is configured to be held and housed in the machined insulation block interior 56a (see FIG. 5A) of the second machined insulation block 66 (see FIG. 5A), when in use in the portable conduction welding apparatus 10.

As further shown in FIG. 5B, the second machined heater block 68, such as the upper machined heater block 68a, has two heater block holes 115o formed in a top side 206b of the second machined heater block 68, and heater block holes 115o are each configured to receive a tail portion of the body portion 170b of each of the two second indexing pins 168b (see FIG. 3C). As further shown in FIG. 5B, the second machined heater block 68, such as the upper machined heater block 68a, has a heater element through opening 195a (see also FIG. 3C) configured to receive the heater element 74 (see FIG. 3C), such as the cartridge heaters 76 (see FIG. 3C), for example, the second heater element 95 (see FIG. 3C). FIG. 5A shows one (1) heater element through opening 195a. However, the second machined heater block 68 may have more than one (1) heater element through openings 195a to accommodate a sufficient number of heater elements 74, such as cartridge heaters 76, depending on the size of the thermoplastic composite parts 24 to be welded.

As shown in FIG. 5B, the second machined heater block 68 has a thermocouple opening 196a (see also FIGS. 3B, 3C) configured to receive the thermocouple 96 (see FIG. 3C), such as the second thermocouple 100 (see FIG. 3C), for example, the upper thermocouple 100a (see FIG. 3C). As shown in FIG. 3C, the thermocouple opening 196a is formed through a portion of an interior width of the second machined heater block 68, while the heater element through opening 195a is formed through an entire width of the second machined heater block 68.

FIG. 5B further shows a heater block hole 115q configured to receive the ground screw 172f (see FIG. 3A) inserted through the first cut-out 205a in the second machined insulation block 66 (see FIGS. 3A, 5A).

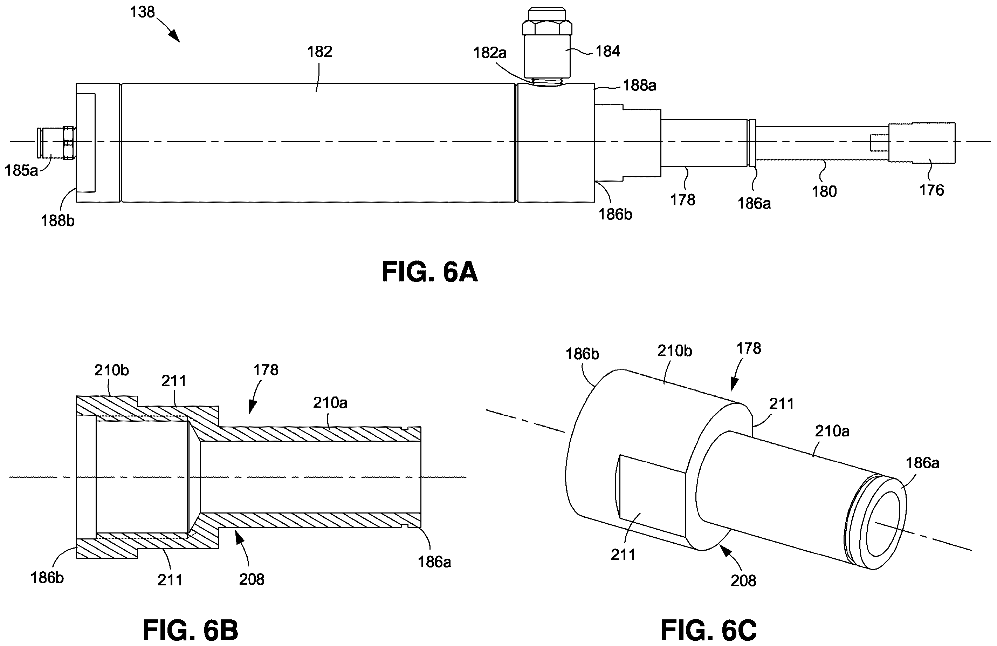

Now referring to FIG. 6A, FIG. 6A is an illustration of a right side view of an exemplary version of an air cylinder assembly 138 of the actuator assembly 130 (see FIG. 3A) in the form of the air cylinder actuator assembly 136 (see FIG. 3A), of the disclosure. As shown in FIG. 6A, the air cylinder assembly 138 comprises the cylinder nose 176, the cylinder adapter 178, the cylinder extension portion 180 between the cylinder nose 176 and the cylinder adapter 178, and the air cylinder 182 with the exhaust valve 184 and the straight fitting 185a. As shown in FIG. 6A, the cylinder adapter 178 has a first end 186a attached to the cylinder extension portion 180 and has a second end 186b attached to a first end 188a of the air cylinder 182. As further shown in FIG. 6A, the air cylinder 182 has a second end 188b attached to the straight fitting 185a. The air cylinder 182 has the exhaust valve 184 (see FIG. 6A) attached to an air cylinder exterior portion 182a (see FIG. 3A).

Now referring to FIGS. 6B-6C, FIG. 6B is an illustration of a right side sectional view of an exemplary version of the cylinder adapter 178 of the air cylinder assembly 138 of FIG. 6A, and FIG. 6C is an illustration of a right side perspective view of the cylinder adapter 178 of the air cylinder assembly 138 of FIG. 6A. As shown in FIGS. 6B-6C, the cylinder adapter 178 has the first end 186a and the second end 186b, and a body 208 formed between the first end 186a and the second end 186b. As shown in FIGS. 6B-6C, the body 208 is hollow and has a first cylindrical portion 210a and a second cylindrical portion 210b coupled to, or unitary with, the first cylindrical portion 210a. The second cylindrical portion 210b has an outer diameter that is greater in length than a diameter of the first cylindrical portion 210a. The second cylindrical portion 210b has a recessed portions 211 formed on each side of the second cylindrical portion 210b.

Now referring to FIG. 7, FIG. 7 is an illustration of a front perspective view of an exemplary version of a portable conduction welding system 12 of the disclosure. The portable conduction welding system 12, as shown in FIG. 7, includes an exemplary version of a portable conduction welding apparatus 10, such as a compact portable conduction welding apparatus 10a, in a disassembled state 212, a support apparatus 16, such as a support stand 16a, and a carrying case 14, such as a suitcase 14a. As shown in FIG. 7, the portable conduction welding apparatus 10 in the disassembled state 212 is packed, or stored, and secured, in an interior 213 of the carrying case 14, such as the suitcase 14a. FIG. 7 shows the portable conduction welding apparatus 10 with the heating system 46, the force application and monitoring system 102 with the clamp assembly 104 and the air cylinder actuator assembly 136, and the indexing assembly 166, and the controller 85. The carrying case 14, such as the suitcase 14a, is handheld and can be easily transported from one location 15 (see FIG. 1) to another location 15.

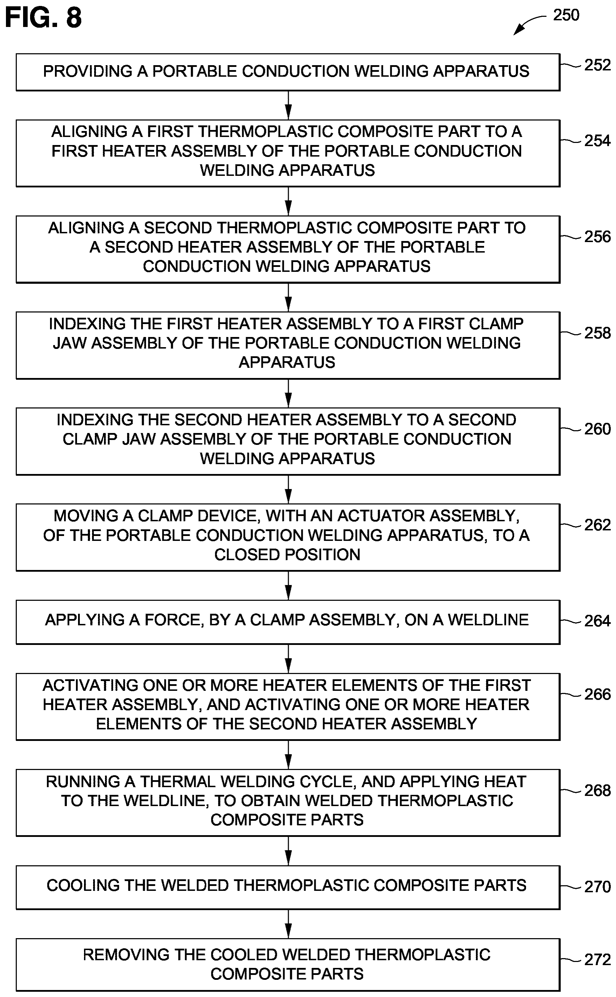

Now referring to FIG. 8, FIG. 8 is an illustration of a flow diagram of an exemplary version of a method 250 of the disclosure. In another version of the disclosure, there is provided the method 250 of using a portable conduction welding apparatus 10 (see FIGS. 1, 2-2B, 3A-3E), such as a portable conduction welding tool 10a (see FIGS. 1, 7), for thermoplastic welding 20 (see FIG. 1), such as conduction welding 22 (see FIG. 1) of thermoplastic composite parts 24 (see FIGS. 1, 3B, 11). The blocks in FIG. 8 represent operations and/or portions thereof, or elements, and lines connecting the various blocks do not imply any particular order or dependency of the operations or portions thereof, or elements. FIG. 8 and the disclosure of the steps of the method 250 set forth herein should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As shown in FIG. 8, the automated method 250 comprises the step of providing 252 the portable conduction welding apparatus 10. As discussed in detail above, the portable conduction welding apparatus 10 comprises a heating system 46 (see FIGS. 1, 2A-2B). The heating system 46 comprises a first heater assembly 50 (see FIGS. 1, 2A-2B), such as a lower heater assembly 50a (see FIGS. 2A-2B), or bottom heater assembly, and comprises a second heater assembly 52 (see FIGS. 1, 2-2B), such as an upper heater assembly (see FIGS. 2A-2B), or top heater assembly, separated from the first heater assembly 50 and positioned opposite the first heater assembly 50, when in use.

As shown in FIGS. 1, 2A-2B, each of the first heater assembly 50 and the second heater assembly 52 comprises a machined insulation block 56, a machined heater block 58 positioned within the machined insulation block 56, one or more heater elements 74 coupled to the machined heater block 58, and a thermocouple 96 coupled to the machined heater block 58. The one or more heater elements 74 are configured to apply, and do apply, heat 30 (see FIG. 1) during a thermal welding cycle 75 (see FIG. 1) of the thermoplastic welding 20, such as the conduction welding 22. Each thermocouple 96 is configured to monitor a temperature 36 of heat 30 applied by the one or more heater elements 74.

In particular, as shown in FIGS. 2A-2B, the first heater assembly 50, such as the lower heater assembly 50a, or bottom heater assembly, comprises a first machined insulation block 60, such as a lower machined insulation block 60a, or bottom machined insulation block, and comprises a first machined heater block 64, such as a lower machined heater block 64a, or bottom machined heater block. Further, the first heater assembly 50, such as the lower heater assembly 50a, comprises one or more heater elements 74, such as one or more first heater elements 88, for example, one or more lower heater elements 88a, or one or more bottom heater elements, coupled to the first machined heater block 64, such as the lower machined heater block 64a. Further, the first heater assembly 50, such as the lower heater assembly 50a, comprises a thermocouple 96, such as a first thermocouple 98, for example, a lower thermocouple 98a, or bottom thermocouple, coupled to the first machined heater block 64, such as the lower machined heater block 64a. The thermocouple 96, such as the first thermocouple 98, for example, the lower thermocouple 98a, is configured to monitor, and monitors, a temperature 36 (see FIG. 1) of the heat 30 (see FIG. 1) applied and supplied by the one or more heater elements 74, such as the one or more first heater elements 88, to the first machined heater block 64.

In particular, as shown in FIGS. 2A-2B, the second heater assembly 52, such as the upper heater assembly 52a, or top heater assembly, comprises a second machined insulation block 66, such as an upper machined insulation block 66a, or top machined insulation block, and comprises a second machined heater block 68, such as an upper machined heater block 68a, or top machined heater block. Further, the second heater assembly 52, such as the upper heater assembly 52a, comprises one or more heater elements 74, such as one or more second heater elements 95, for example, one or more upper heater elements 95a, or one or more top heater elements, coupled to the second machined heater block 68, such as the upper machined heater block 68a. Further, the second heater assembly 52, such as the upper heater assembly 52a, comprises a thermocouple 96, such as a second thermocouple 100, for example, an upper thermocouple 100a, or top thermocouple, coupled to the second machined heater block 68, such as the upper machined heater block 68a. The thermocouple 96, such as the second thermocouple 100, for example, the upper thermocouple 100a, is configured to monitor, and monitors, a temperature 36 of the heat 30 applied and supplied by the one or more heater elements 74, such as the one or more second heater elements 95, to the second machined heater block 68.

Each machined insulation block 56, such as the first machined insulation block 60 and the second machined insulation block 66, is preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. Each machined insulation block 56, such as the first machined insulation block 60 and the second machined insulation block 66, may also be made of carbon-ceramic matrix, carbon-carbon composite materials, or other suitable materials.

Each machined heater block 58, such as the first machined heater block 64 and the second machined heater block 68, is preferably made of a metal material 72 (see FIG. 1). Preferably, the metal material 72 comprises, as shown in FIG. 1, stainless steel 72a, steel 72b, aluminum 72c, carbon steel 72d, aluminum bronze 72e, or another suitable metal material 72. The machined heater block 58 may also be made of another suitable material.

Each of the one or more heater elements 74, such as the one or more first heater elements 88, for example, the one or more lower heater elements 88a, and such as the one or more second heater elements 95, for example, the one or more upper heater elements 95a, comprises one or more cartridge heaters 76 (see FIGS. 1, 2A-2B, 3B-3C). In one version, as shown in FIGS. 1, 3B-3C, each of the one or more heater elements 74 comprises a cartridge heater 76 having one or more heating wires 77 housed in a metal sleeve 80, or metal sheath, and attached to one or more lead wires 78. Each cartridge heater 76 is connected to one of the one or more controllers 85 (see FIGS. 2A-2B). Each cartridge heater 76 may further comprise insulation material, such as lead wire insulation material, and/or metal sleeve insulation material, to allow optimal heat transfer. The insulation material may comprise magnesium oxide, or another suitable insulation material.

Each cartridge heater 76 is preferably a resistance heater that provides electrical resistance heating 82 (see FIG. 1) through conduction 84 (see FIG. 1) from the one or more cartridge heaters 76 to the thermoplastic composite parts 24, and in particular, to the weldline 28a (see FIG. 3B), or bondline 28b (see FIG. 3B), of the thermoplastic composite parts 24 (see FIG. 3B) being welded together.

As shown in FIGS. 1, 2-2B, the portable conduction welding apparatus 10 further comprises a force application and monitoring system 102 coupled to the heating system 46. The force application and monitoring system 102 comprises a clamp assembly 104 (see FIGS. 1, 2A-2B). As shown in FIGS. 1, 2A-2B, the clamp assembly 104 comprises a clamp device 105 having clamp jaws 106, including a first clamp jaw 108, such as a lower clamp jaw 108a, or bottom clamp jaw, pivotably coupled to a second clamp jaw 110, such as an upper clamp jaw 110a, or top clamp jaw. As further shown in FIGS. 2A-2B, the clamp assembly 104 comprises clamp jaw assemblies 116. The clamp jaw assemblies 116 comprise a first clamp jaw assembly 118 (see FIGS. 2A-2B), such as a lower clamp jaw assembly 118a (see FIGS. 2A-2B), or bottom clamp jaw assembly, and a second clamp jaw assembly 120 (see 2A-2B), such as an upper clamp jaw assembly 120a (see FIGS. 2A-2B), or top clamp jaw assembly. As further shown in FIGS. 1, 2A-2B, the first clamp jaw 108 is coupled, or attached, to a first clamp jaw assembly 118, such as a lower clamp jaw assembly 118a, or bottom clamp jaw assembly, and the second clamp jaw is coupled, or attached, to a second clamp jaw assembly 120, such as an upper clamp jaw assembly 120a, or top clamp jaw assembly. The first clamp jaw assembly 118, such as the lower clamp jaw assembly 118a, is positioned separate from, and opposite to, the second clamp jaw assembly 120, such as the upper clamp jaw assembly 120a.

In one version, as shown in FIGS. 2A-2B, 3-3E, the clamp jaw assemblies 116 each comprise an anvil jaw 122, an anvil strap 124 attached to the anvil jaw 122, and a trap bar 126 having two or more trap bar holes 115c (see FIG. 3C) configured to receive, and receiving, two or more of the plurality of indexing pins 168. In particular, the first clamp jaw assembly 118, such as the lower clamp jaw assembly 118a, comprises a first anvil jaw 122a (see FIG. 3A), or bottom anvil jaw, a first anvil strap 124a (see FIG. 3A), or bottom anvil strap, attached to the first anvil jaw 122a, and a first trap bar 126a (see FIG. 3A), or bottom trap bar, attached to the first anvil jaw 122a. In particular, the second clamp jaw assembly 120 has a second anvil jaw 122b (see FIG. 3A), or top anvil jaw, a second anvil strap 124b (see FIG. 3A), or top anvil strap, attached to the second anvil jaw 122b, and a second trap bar 126b (see FIG. 3A), or top trap bar, attached to a load bar 128 (see FIG. 3A), discussed in further detail below.

As shown in FIGS. 1, 2A-2B, 3E, the clamp assembly 104 further comprises an actuator assembly 130 coupled, or attached, to the clamp device 105. The actuator assembly 130 is configured to move, and moves, the clamp device 105, including the clamp jaws 106 with the attached clamp jaw assemblies 116, between an open position 132 (see FIG. 1) and a closed position 134 (see FIG. 1). During the thermoplastic welding 20, such as the conduction welding 22, and during the thermal welding cycle 75 of the welding process 23 (see FIG. 1), the clamp device 105, including the clamp jaws 106 with the attached clamp jaw assemblies 116 are in the closed position 134.

In one version, as shown in FIGS. 1, 2A-2B, the actuator assembly 130 comprises an air cylinder actuator assembly 136. As shown in FIGS. 2A-2B, 3A, the air cylinder actuator assembly 136 comprises an air cylinder assembly 138 coupled, or attached, to the clamp device 105. In particular, as shown in FIGS. 2A-2B, the air cylinder assembly 138 is coupled, or attached, to portions of both the first clamp jaw 108 and the second clamp jaw 110 at the base of the clamp device 105. As shown in FIGS. 2A-2B, 3, the air cylinder actuator assembly 136 further comprises a valve assembly 140 having a quick disconnect coupling 142 configured to be attached, and attached, to an air line 143, which, in turn, is plugged into, or attached to, an air supply 144 of pressurized air 144a, such as compressed air. As shown in FIGS. 2A-2B, 3A, the air cylinder actuator assembly 136 further comprises an air tubing line 145 having a first end 146a connected to the air cylinder assembly 138, and having a second end 146b connected to the valve assembly 140.

When activated, the pressurized air 144a is delivered through the air line 143, through the valve assembly 140, through the air tubing line 145, through the air cylinder assembly 138, and to the clamp device 105 to deliver pneumatic air pressure to the clamp device 105, to cause the clamp device 105, including the clamp jaws 106 and the clamp jaw assemblies 116, to move from the open position 132 to the closed position 134, and to close the clamp device 105, including the clamp jaws 106 and the clamp jaw assemblies 116, and to apply pressure 32 (see FIG. 1) to the thermoplastic composite parts 24 to be welded together. The pressurized air 144a, such as compressed air, powers the closing of the clamp device 105, including the clamp jaws 106 and the clamp jaw assemblies 116, and the clamping of the thermoplastic composite parts 24 against each other. In one version, the pressurized air 144a, such as compressed air, may have a air pressure (see FIG. 1) of 758 kPa (110 psi, one-hundred ten pounds per square inch). In other versions, the pressurized air 144a, such as the compressed air, may have another suitable air pressure.

The air cylinder actuator assembly 136 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are complete, the pressurized air 144a, such as the compressed air, is turned off, and the clamp device 105, including the clamp jaws 106 with the attached clamp jaw assemblies 116, move from the closed position 134 back to the open position 132.

In another version, as shown in FIGS. 1, 3E, the actuator assembly 130 comprises a threaded screw rod actuator assembly 148. As shown in FIG. 3E, the threaded screw rod actuator assembly 148 comprises a threaded screw rod 150 having a first end 152a coupled to the clamp device 105, and having a second end 152b with a cylindrical collar 154 and a through opening 155 through the cylindrical collar 154. In particular, as shown in FIG 3E, the first end 152a of the threaded screw rod 150 is coupled, or attached, to portions of both the first clamp jaw 108 and the second clamp jaw 110 at the base of the clamp device 105. As shown in FIG. 3E, the threaded screw rod actuator assembly 148 further comprises a handle 156, such as an L-shaped handle 156a, having a first portion 158a, and a second portion 158b forming a ninety degree angle with respect to the first portion 158a. As shown in FIG. 3E, the first portion 158a has a length that is greater than a length of the second portion 158b. As further shown in FIG. 3E, the first portion 158a is inserted through the through opening 155 of the cylindrical collar 154.

In order to cause the clamp device 105, including the clamp jaws 106 and the clamp jaw assemblies 116, to move from the open position 132 to the closed position 134, the handle 156 is rotated in a first rotation direction to, in turn, rotate the threaded screw rod 150 in the first rotation direction, and to actuate and to cause the threaded screw rod 150 to advance toward the clamp device 105 in a linear actuation direction. The threaded screw rod 150 is advanced in the linear actuation direction, to cause the clamp device 105, including the clamp jaws 106 and the clamp jaw assemblies 116, to move from the open position 132 to the closed position 134, until the clamp device 105, including the clamp jaws 106 and the clamp jaw assemblies 116, is closed, and pressure 32 (see FIG. 1) is applied to the thermoplastic composite parts 24 to be welded together.

The threaded screw rod actuator assembly148 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are complete, the handle 156 is turned in a second rotation direction opposite the first rotation direction, to rotate the threaded screw rod 150 in the second rotation direction, and to cause the threaded screw rod 150 to move away from the clamp device 105, to release the clamp device 105, and to cause the clamp device 105, including the clamp jaws 106 with the attached clamp jaw assemblies 116, to move from the closed position 134 back to the open position 132.

As shown in FIGS. 1, 2A-2B, the force application and monitoring system 102 further comprises a load cell 160. As shown in FIGS. 2A-2B, the load cell 160 is coupled to the clamp assembly 104, and is preferably coupled to the second clamp jaw assembly 120, such as the upper clamp jaw assembly 120a. The load cell 160 is configured to monitor, and monitors a force 162 (see FIG. 1) applied by the clamp assembly 104 to the thermoplastic composite parts 24, such as to the first thermoplastic composite part 24a and to the second thermoplastic composite part 24b. The second clamp jaw assembly 120, such as the upper clamp jaw assembly 120a, may further comprise the load bar 128 (see FIGS. 1, 3A, 3C) coupled to the load cell 160. As shown in FIGS. 2A-2B, the second clamp jaw assembly 120, such as the upper clamp jaw assembly 120a, may further comprise one or more centering bars 163 (see FIGS. 1, 2A, 3A) coupled to the load bar 128. The one or more centering bars 163 are optional, and are used to keep the second clamp jaw assembly 120 (see FIG. 3C) from spinning about a bolt 164 (see FIG. 3C), such as a first load cell bolt 164a (see FIG. 3C), that attaches the load bar 128 (see FIG. 3C) to the load cell 160 (see FIG. 3C).

As shown in FIGS. 2A-2B, the load cell 160 is attached to a plug 94 that is attached to the controller 85. The load cell 160 is powered with the power supply 86 (see FIGS. 2A-2B), such as the electrical power supply 86a (see FIGS. 2A-2B), of the controller 85.

As shown in FIGS. 1, 3C, 3D, the portable conduction welding apparatus 10 further comprises an indexing assembly 166 coupled to the clamp assembly 104. As further shown in FIGS. 1, 3C, 3D), the indexing assembly 166 comprises a plurality of indexing pins 168 (see FIGS. 3C, 3) comprising a plurality of first indexing pins 168a (see FIGS. 3C, 3D) and a plurality of second indexing pins 168b (see FIGS. 3C, 3D). In one version, as shown in FIGS. 3C, 3D, the plurality of indexing pins 168 comprise two first indexing pins 168a and two second indexing pins 168b. As shown in FIG. 3C, the first heater assembly 50, such as the lower heater assembly 50a, is indexed, or aligned, to the first clamp jaw assembly 118, such as the lower clamp jaw assembly 118a, with the two first indexing pins 168a. As further shown in FIG. 3C, the second heater assembly 52, such as the upper heater assembly 52a, is indexed, or aligned, to the second clamp jaw assembly 120, such as the upper clamp jaw assembly 120a, with the two second indexing pins 168b. In other versions, the first heater assembly 50 may be indexed to the first clamp jaw assembly 118 with greater than two first indexing pins 168a. In other versions, the second heater assembly 52 may be indexed to the second clamp jaw assembly 120 with greater than two second indexing pins 168b.

As shown in FIGS. 1, 3C, 3D, the portable conduction welding apparatus 10 further comprises one or more controllers 85 having one or more power supplies 86, such as one or more electrical power supplies 86a, to control and to power the portable conduction welding apparatus 10. In particular, the one or more controllers 85 and the one or more power supplies 86 control and power the one or more heater elements 74, such as the first heater elements 88, or lower heater elements 88a, and the second heater element 95, or upper heater element 95a, the thermocouples 96, such as the first thermocouple 98, or lower thermocouple 98a, and the second thermocouple 100, or upper thermocouple 100a, and the load cell 160. One or more connector elements 90 (see FIGS. 2A-2B), such as one or more electrical wires 92 (see FIGS. 1, 2A-2B), one or more plugs 94 (see FIGS. 1, 2-2B), or other suitable connector elements 90, such as electrical connector elements, may be used to connect the one or more heater elements 74, the thermocouples 96, and the load cell 160 to the one or more controllers 85.

The step of providing 252 the portable conduction welding apparatus 10 may further comprise, coupling the portable conduction welding apparatus 10 to a support apparatus 16 (see FIGS. 1, 10, 11), such as support stand 16a (see FIGS. 1, 10, 11), to enable the portable welding apparatus 10 to be secured in an upright position 18 (see FIGS. 1, 10, 11), during the thermoplastic welding 20 (see FIG. 11), such as the conduction welding 22 (see FIG. 11), of the thermoplastic composite parts 24 (see FIG. 11), such as the first thermoplastic composite part 24a (see FIG. 11) and the second thermoplastic composite part 24b (see FIG. 11).

As shown in FIG. 8, the method 250 further comprises the step of aligning 254 a first thermoplastic composite part 24a to the first heater assembly 50, such as the lower heater assembly 50a, or bottom heater assembly. As further shown in FIG. 8, the method 250 further comprises the step of aligning 256 a second thermoplastic composite part 24b to the second heater assembly 52, such as the upper heater assembly 52a, or top heater assembly. The first thermoplastic composite part 24a may be aligned to the first heater assembly 50, such as the lower heater assembly 50a, with tabs 54 (see FIG. 1), visual features 55 (see FIG. 1), or another suitable visual device or mechanism, coupled to either the first thermoplastic composite part 24a or to the first heater assembly 50. Similarly, the second thermoplastic composite part 24b may be aligned to the second heater assembly 52, such as the upper heater assembly 52a, with tabs 54, visual features 55, or another suitable visual device or mechanism, coupled to either the second thermoplastic composite part 24b or to the second heater assembly 52.

The step of aligning 254 the first thermoplastic composite part 24a to the first heater assembly 50, such as the lower heater assembly 50a, and the step of aligning 256 the second thermoplastic composite part 24b to the second heater assembly 52, such as the upper heater assembly 52a, may further comprise, aligning the first thermoplastic composite part 24a and aligning the second thermoplastic composite part 24b, each comprising one of, as shown in FIG. 1, a thermoplastic composite laminate 38, a coupon 40, a workpiece 42, a thermoplastic composite aircraft part 44, or another suitable thermoplastic composite part 24. As shown in FIG. 1, the thermoplastic composite aircraft part 44 may comprise one or more of an aircraft passenger door surround part 44a, a bracket 44b, a clip 44c, a fitting 44d, a panel 44e, a frame 44f, an intercostal 44g, a floor beam 44h, or another suitable thermoplastic composite aircraft part 44. The thermoplastic composite parts 24 may also comprise brackets, clips, fittings, frames, beams, and other parts or components to be welded together and used in spacecraft, rotorcraft, automobiles, watercraft, and other vehicles and structures.

As shown in FIG. 8, the method 250 further comprises the step of indexing 258 the first heater assembly 50, such as the lower heater assembly 50a, to the first clamp jaw assembly 118 (see FIG. 3C), such as the lower clamp jaw assembly 118a (see FIG. 3C), with the plurality of first indexing pins 168a (see FIG. 3C), for example, two first indexing pins 168a. As shown in FIG. 8, the method 250 further comprises the step of indexing 260 the second heater assembly 52 (see FIG. 3C), such as the upper heater assembly 52a (see FIG. 3C), to the second clamp jaw assembly 120 (see FIG. 3C), such as the upper clamp jaw assembly 120a (see FIG. 3C), with the plurality of second indexing pins 168b (see FIG. 3C), for example, two second indexing pins 168b.

As shown in FIG. 8, the method 250 further comprises the step of moving 262 the clamp device 105, with the actuator assembly 130, from an open position 132 (see FIG. 1) to a closed position 134 (see FIGS. 1, 11). The step of moving 262 the clamp device 105, with the actuator assembly 130, may further comprise, moving the clamp device 105, with the actuator assembly 130 comprising an air cylinder actuator assembly 136 (see FIG. 2A) comprising an air cylinder assembly 138 (see FIG. 2A) coupled to the clamp device 105, a valve assembly 140 (see FIG. 2A) having a quick disconnect coupling 142 (see FIG. 2A) configured to be attached to an air supply 144 (see FIG. 2A), such as pressurized air 144a (see FIG. 2A), and an air tubing line 145 (see FIG. 2A) having a first end 146a (see FIG. 2A) connected to the air cylinder assembly 138, and having a second end 146b (see FIG. 2A) connected to the valve assembly 140.

When activated, the pressurized air 144a is delivered through the air line 143, through the valve assembly 140, through the air tubing line 145, through the air cylinder assembly 138, and to the clamp device 105 to deliver pneumatic air pressure to the clamp device 105, to cause the clamp device 105, including the clamp jaws 106 and the clamp jaw assemblies 116, to move from the open position 132 to the closed position 134, and to close the clamp device 105, including the clamp jaws 106 and the clamp jaw assemblies 116, and to apply pressure 32 (see FIG. 1) to the thermoplastic composite parts 24 to be welded together. The pressurized air 144a, such as compressed air, powers the closing of the clamp device 105, including the clamp jaws 106 and the clamp jaw assemblies 116, and the clamping of the thermoplastic composite parts 24 against each other. In one version, the pressurized air 144a, such as compressed air, may have a air pressure (see FIG. 1) of 758 kPa (110 psi, one-hundred ten pounds per square inch). In other versions, the pressurized air 144a, such as the compressed air, may have another suitable air pressure.

The air cylinder actuator assembly 136 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are complete, the pressurized air 144a, such as the compressed air, is turned off, and the clamp device 105, including the clamp jaws 106 with the attached clamp jaw assemblies 116, move from the closed position 134 back to the open position 132.

The step of moving 262 the clamp device 105, with the actuator assembly 130, may further comprise, moving the clamp device 105, with the actuator assembly 130 comprising a threaded screw rod actuator assembly 148 comprising, as shown in FIG. 3E, a threaded screw rod 150 having a first end 152a coupled to the clamp device 105, and having a second end 152b with a cylindrical collar 154 having a through opening 155, and a handle 156, such as an L-shaped handle 156a, having a first portion 158a, and a second portion 158b forming a ninety degree angle with respect to the first portion 158a. The handle is inserted through the through opening 155, and is configured to rotate in a first rotation direction, and rotating in the first rotation direction, the threaded screw rod 150.

In order to cause the clamp device 105, including the clamp jaws 106 and the clamp jaw assemblies 116, to move from the open position 132 to the closed position 134, the handle 156 is rotated in a first rotation direction to, in turn, rotate the threaded screw rod 150 in the first rotation direction, and to actuate and to cause the threaded screw rod 150 to advance toward the clamp device 105 in a linear actuation direction. The threaded screw rod 150 is advanced in the linear actuation direction, to cause the clamp device 105, including the clamp jaws 106 and the clamp jaw assemblies 116, to move from the open position 132 (see FIG. 1) to the closed position 134 (see FIG. 1), until the clamp device 105, including the clamp jaws 106 and the clamp jaw assemblies 116, is closed, and pressure 32 (see FIG. 1) is applied to the thermoplastic composite parts 24 to be welded together.

The threaded screw rod actuator assembly148 is configured to move, and moves, the clamp device 105, including the clamp jaws 106 with the attached clamp jaw assemblies 116, between the open position 132 (see FIG. 1) and the closed position 134 (see FIG. 1). Once the welding process 23 comprising the thermoplastic welding 20, for example, the conduction welding 22, and the thermal welding cycle 75 are complete, the handle 156 is turned in a second rotation direction opposite the first rotation direction, to rotate the threaded screw rod 150 in the second rotation direction, and to cause the threaded screw rod 150 to move away from the clamp device 105, to release the clamp device 105, and to cause the clamp device 105, including the clamp jaws 106 with the attached clamp jaw assemblies 116, to move from the closed position 134 back to the open position 132.

As shown in FIG. 8, the method 250 further comprises the step of applying 264 the force 162, by the clamp assembly 104, on or to a weldline 28a (see FIG. 1), or bondline 28b (see FIG. 1), comprising contact interfaces 26 (see FIG. 1) of the first thermoplastic composite part 24a and the second thermoplastic composite part 24b. As shown in FIG. 8, the method 250 further comprises the step of activating 266 the one or more heater elements 74 of the first heater assembly 50, such as the lower heater assembly 50a, and activating the one or more heater elements 74 of the second heater assembly 52, such as the upper heater assembly 52a.

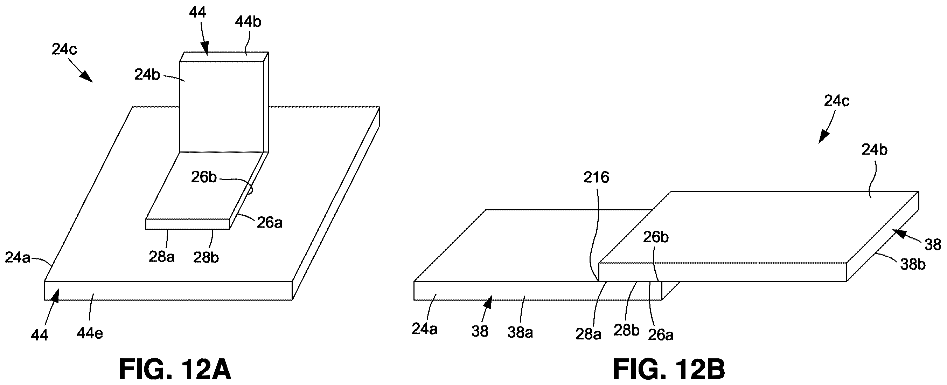

As shown in FIG. 8, the method 250 further comprises the step of running 268 a thermal welding cycle 75 (see FIG. 1), and applying heat 30 (see FIG. 1) from the one or more heater elements 74 of the first heater assembly 50, such as the lower heater assembly 50a, and the one or more heater elements 74 of the second heater assembly 52, such as the upper heater assembly 52a, at the weldline 28a, or bondline 28b, to melt thermoplastic composite material 25 (see FIG. 1), or thermoplastic composite materials 25, of the first thermoplastic composite part 24a and the second thermoplastic composite part 24b together at the weldline 28a (see FIG. 1), or bondline 28b (see FIG. 1), to obtain welded thermoplastic composite parts 24c (see FIGS. 1, 12A-12B). The step of running 268 the thermal welding cycle 75 (see FIG. 1) and applying the heat 30 (see FIG. 1) further comprises, running the thermal welding cycle 75 and applying the heat 30 at the weldline 28a, or bondline 28b, at the temperature 36 (see FIG. 1) in a range of from 260° C (two-hundred sixty degrees Celsius) to 375° C (three-hundred seventy-five degrees Celsius) (500 ° F (five-hundred degrees Fahrenheit) to 707° F (seven-hundred seven degrees Fahrenheit)), and applying the force 162 by the clamp assembly 104 (see FIGS. 1, 2A-2B) on the weldline 28a, or bondline 28b, at a pressure 32 (see FIG. 1) in a range of from 69 kPa (10 psi, ten pounds per square inch) to 414 kPa (60 psi, sixty pounds per square inch).

As shown in FIG. 8, the method 250 further comprises the step of cooling 270 the welded thermoplastic composite parts 24c. As shown in FIG. 8, the method 250 further comprises the step of removing 272 the cooled welded thermoplastic composite parts 24c, such as the welded thermoplastic composite parts 24c that have been sufficiently cooled, from the portable conduction welding apparatus 10.

The method 250 may further comprise after removing 272 the cooled welded thermoplastic composite parts 24c, such as the welded thermoplastic composite parts 24c that are cooled, from the portable conduction welding apparatus 10, the step of securing the portable conduction welding apparatus 10 within a carrying case 14 (see FIGS. 1, 7), and transporting the portable conduction welding apparatus 10 within the carrying case 14 to another location 15 (see FIG. 1) to perform thermoplastic welding 20 (see FIG. 1), such as conduction welding 22 (see FIG. 1), of thermoplastic composite parts 24, such as a first thermoplastic composite part 24a (see FIGS. 1, 3) and a second thermoplastic composite part 24b (see FIGS. 1, 3B). Preferably, the portable conduction welding apparatus 10 is a portable conduction welding tool 10a (see FIG. 7) and is a compact portable conduction welding apparatus 10b (see FIG. 7) designed to be secured and transported in the carrying case 14 (see FIGS. 1, 7). Preferably, the carrying case 14 is handheld. As shown in FIG. 1, the carrying case 14 may comprise a suitcase 14a (see also FIG. 7), a wheeled carrying case 14b, a briefcase 14c, a backpack 14d, a duffel bag 14e, or another suitable carrying case 14.

The time to index the thermoplastic composite parts 24 and warm the heater assemblies 48 may be 30 minutes to 40 minutes long, and the thermal welding cycle 75 (see FIG. 1) to apply pressure 32 and heat 30 to the thermoplastic composite parts 24 to obtain welded thermoplastic composite parts 24c, and the time to cool the welded thermoplastic composite parts 24c, may be 90 minutes to 100 minutes long. Thus, the total time for preparation and the welding process 23 (see FIG. 1), such as the thermoplastic welding 20, for example, conduction welding 22, may be 120 minutes to 150 minutes long. However, times may vary depending on the size of the thermoplastic composite parts 24 to be welded and the time to heat and cool the thermoplastic composite parts 24.

Now referring to FIG. 9, FIG. 9 is an illustration of a perspective view of a user 214 aligning a thermoplastic composite part 24, such as a first thermoplastic composite part 24a, to a first machined heater block 64, such as a lower machined heater block 64a, of a first heater assembly 50, such as a lower heater assembly 50a, in preparation for the welding process 23 (see FIG. 1), such as thermoplastic welding 20 (see FIG. 1), for example, conduction welding 22 (see FIG. 1). As shown in FIG. 9, the first thermoplastic composite part 24a, is in the form of a coupon 40, such as a first coupon 40a. FIG. 9 further shows a perspective view of a thermoplastic composite part 24, such as a second thermoplastic composite part 24b, for example, a coupon 40, such as a second coupon 40b, to be aligned by the user 214 to a second machined heater block 68, such as an upper machined heater block 68a, of a second heater assembly 52, such as an upper heater assembly 52a.

Now referring to FIG. 10, FIG. 10 is an illustration of a left side perspective view of the portable conduction welding apparatus 10, such as the portable conduction welding tool 10a, and shows a user 214 indexing the first heater assembly 50, such as the lower heater assembly 50a, having the first thermoplastic composite part 24a, such as the first coupon 40a, of FIG. 9, aligned to the first heater assembly 50, to a first clamp jaw assembly 118, such as a lower clamp jaw assembly 118a, using the first indexing pins 168a. FIG. 10 further shows the user 214 indexing the second heater assembly 52, such as the upper heater assembly 52a, having the second thermoplastic composite part 24b, such as the second coupon 40b, aligned to the second heater assembly 52, to a second clamp jaw assembly 120, such as an upper clamp jaw assembly 120a, using the second indexing pins 168b. FIG. 10 further shows the clamp assembly 104, the first anvil jaw 122a, the second anvil jaw 122b, the first anvil strap 122a, the second anvil strap 122b, the load cell 160, the first block member 174a, the second block member 174b, and the load cell 160, of the portable conduction welding apparatus 10.

FIG. 10 further shows the portable conduction welding apparatus 10 supported by the support apparatus 16, such as the support stand 16a, to enable the portable conduction welding apparatus 10 to be secured in the upright position 18 on a surface 19, such as a tabletop surface 19a, of a table 215, while in use during the welding process 23 (see FIG. 1) of thermoplastic welding 20 (see FIG. 1), such as conduction welding 22 (see FIG. 1).

Now referring to FIG. 11, FIG. 11 is an illustration of front perspective view of the portable conduction welding apparatus 10, such as the portable conduction welding tool 10a, of FIG. 10, in an assembled state 212b. FIG. 11 shows the first thermoplastic composite part 24a, such as the first coupon 40a, aligned to the first heater assembly 50, such as the lower heater assembly 50a, and indexed, and shows the second thermoplastic composite part 24b, such as the second coupon 40b, aligned to the second heater assembly 52, such as the upper heater assembly 52a, and indexed, in a thermal welding cycle configuration 75a, during the thermal welding cycle 75 (see FIG. 1) of the thermal welding 20 (see FIG. 1), such as conduction welding 22 (see FIG. 1).

FIG. 11 shows the first contact interface 26a of the first thermoplastic composite part 24a and the second contact interface 26b of the second thermoplastic composite part 24b, and FIG. 11 shows the weldline 28a of the welded thermoplastic composite parts 24c. FIG. 11 further shows the heater elements 74, such as the heater cartridges 76, including the first heater elements 88, such as the lower heater elements 88a, and the second heater element 95, such as the upper heater element 95a. FIG. 11 further shows the thermocouples 96, such as the first thermocouple 98 and the second thermocouple 100. FIG 11 further shows the clamp assembly 104, the load cell 160 with the plug 94, and the centering bars 163.

FIG. 11 further shows the portable conduction welding apparatus 10 supported by the support apparatus 16, such as the support stand 16a, to enable the portable conduction welding apparatus 10 to be secured in the upright position 18 on the surface 19, such as the tabletop surface 19a, of the table 215, while in use during the thermal welding cycle 75 of the thermoplastic welding 20 (see FIG. 1), such as the conduction welding 22 (see FIG. 1).

Now referring to FIG. 12A, FIG. 12A is an illustration of a perspective view of an exemplary version of two welded thermoplastic composite parts 24c welded together using an exemplary version of the portable conduction welding apparatus 10 (see FIGS. 1-3E) and the method 250 (see FIG. 8) of the disclosure. FIG. 12A shows a first thermoplastic composite part 24a comprising a thermoplastic composite aircraft part 44, in the form of a panel 44e, and shows a second thermoplastic composite part 24b comprising a thermoplastic composite aircraft part 44, in the form of a bracket 44b. As shown in FIG. 12A, the panel 44e and the bracket 44b are welded together at the weldline 28a, or bondline 28b. The first contact interface 26a (see FIG. 12A) of the panel 44e and the second contact interface 26b (see FIG. 12A) of the bracket 44b are welded together. Each of the panel 44e and the bracket 44b are made of thermoplastic composite material 25 (see FIG. 12A).

Now referring to FIG. 12B, FIG. 12B is an illustration of a perspective view of another exemplary version of two welded thermoplastic composite parts 24c welded together using an exemplary version of a portable conduction welding apparatus 10 (see FIGS. 1-3E) and a method 250 (see FIG. 8) of the disclosure.

FIG. 12B shows a first thermoplastic composite part 24a comprising a thermoplastic composite laminate 38, such as a first thermoplastic composite laminate 38a, and shows a second thermoplastic composite part 24b comprising a thermoplastic composite laminate 38, such as a second thermoplastic composite laminate 38b. As shown in FIG. 12B, the first thermoplastic composite laminate 38a and the second thermoplastic composite laminate 38b are welded together at the weldline 28a, or bondline 28b, and form a lap joint 216. The first contact interface 26a (see FIG. 12B) of the first thermoplastic composite laminate 38a and the second contact interface 26b (see FIG. 12B) of the second thermoplastic composite laminate 38b are welded together. Each of the panel 44e and the bracket 44b are made of thermoplastic composite material 25 (see FIG. 12B).

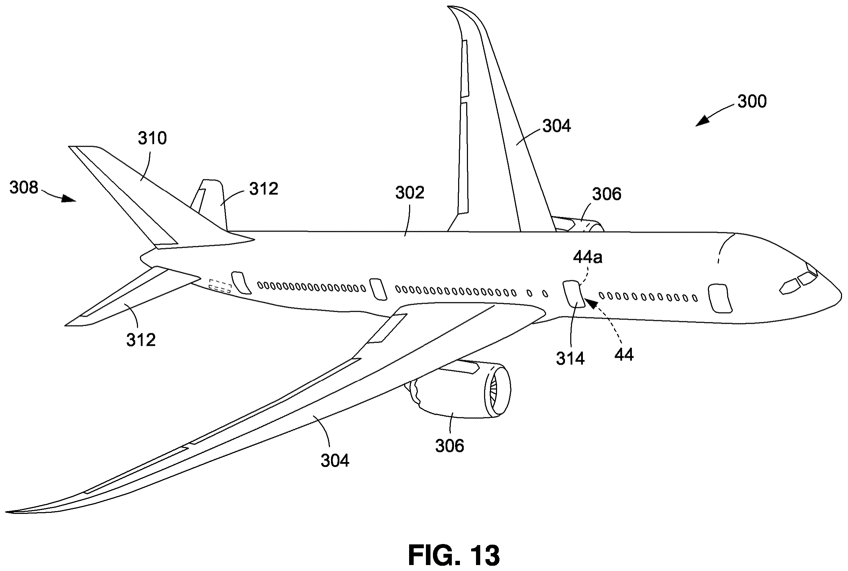

Now referring to FIG. 13, FIG. 13 is an illustration of a perspective view of an aircraft 300 that incorporates thermoplastic composite aircraft parts 44, such as aircraft passenger door surround parts 44a, that can be welded together using an exemplary version of the portable conduction welding apparatus 10 (see FIGS. 1-3E) and the method 250 (see FIG. 8) of the disclosure. As shown in FIG. 13, the aircraft 300 comprises a fuselage 302, wings 304, engines 306, and a tail 308. As shown in FIG. 13, the tail 308 comprises a vertical stabilizer 310 and horizontal stabilizers 312. FIG. 13 further shows an aircraft passenger door 314 having thermoplastic composite aircraft parts 44, such as aircraft passenger door surround parts 44a, in the interior of the aircraft passenger door 314 that can undergo thermoplastic welding 20 (see FIG. 1), such as conduction welding 22, using the portable conduction welding apparatus 10 (see FIGS. 1-3E) and the method 250 (see FIG. 8) disclosed herein.

Although the aircraft 300 shown in FIG. 13 is generally representative of a commercial passenger aircraft having one or more thermoplastic composite aircraft parts 44, the teachings of the disclosed versions of the portable conduction welding apparatus 10 (see FIGS. 1-3E) and the method 250 (see FIG. 8) may be applied to other passenger aircraft.

Moreover, the teachings of the disclosed versions of the portable conduction welding apparatus 10 (see FIGS. 1-3E) and the method 250 (see FIG. 8) may be applied to thermoplastic composite parts 24 (see FIG. 1) that can be welded for cargo aircraft, military aircraft, rotorcraft, and other types of aircraft or aerial vehicles, as well as aerospace vehicles, spacecraft, satellites, space launch vehicles, rockets, and other aerospace vehicles. Further, the teachings of the disclosed versions of the portable conduction welding apparatus 10 (see FIGS. 1-3E) and the method 250 (see FIG. 8) thermoplastic composite parts 24 (see FIG. 1) that can be welded for watercraft, automobiles, trains, architectural structures, or other suitable vehicles or structures.

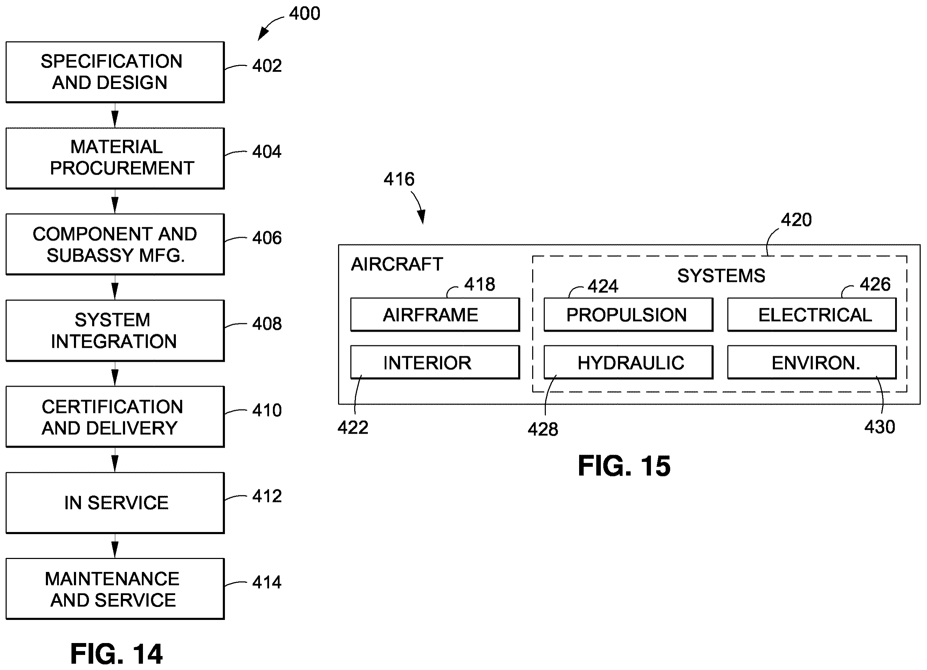

Now referring to FIGS. 14 and 15, FIG. 14 is an illustration of a flow diagram of an exemplary aircraft manufacturing and service method 400, and FIG. 15 is an illustration of an exemplary block diagram of an aircraft 416. Referring to FIGS. 14 and 15, versions of the disclosure may be described in the context of the aircraft manufacturing and service method 400 as shown in FIG. 14, and the aircraft 416 as shown in FIG. 15.

During pre-production, exemplary aircraft manufacturing and service method 400 may include specification and design 402 of the aircraft 416 and material procurement 404. During manufacturing, component and subassembly manufacturing 406 and system integration 408 of the aircraft 416 takes place. Thereafter, the aircraft 416 may go through certification and delivery 410 in order to be placed in service 412. While in service 412 by a customer, the aircraft 416 may be scheduled for routine maintenance and service 414 (which may also include modification, reconfiguration, refurbishment, and other suitable services).

Each of the processes of the aircraft manufacturing and service method 400 may be performed or carried out by a system integrator, a third party, and/or an operator (e.g., a customer). For the purposes of this description, a system integrator may include, without limitation, any number of aircraft manufacturers and major-system subcontractors. A third party may include, without limitation, any number of vendors, subcontractors, and suppliers. An operator may include an airline, leasing company, military entity, service organization, and other suitable operators.

As shown in FIG. 15, the aircraft 416 produced by the exemplary aircraft manufacturing and service method 400 may include an airframe 418 with a plurality of systems 420 and an interior 422. Examples of the plurality of systems 420 may include one or more of a propulsion system 424, an electrical system 426, a hydraulic system 428, and an environmental system 430. Any number of other systems may be included. Although an aerospace example is shown, the principles of the disclosure may be applied to other industries, such as automotive.

Methods and systems embodied herein may be employed during any one or more of the stages of the aircraft manufacturing and service method 400. For example, components or subassemblies corresponding to component and subassembly manufacturing 406 may be fabricated or manufactured in a manner similar to components or subassemblies produced while the aircraft 416 is in service 412. Also, one or more apparatus embodiments, method embodiments, or a combination thereof, may be utilized during component and subassembly manufacturing 406 and system integration 408, for example, by substantially expediting assembly of or reducing the cost of the aircraft 416. Similarly, one or more of apparatus embodiments, method embodiments, or a combination thereof, may be utilized while the aircraft 416 is in service 412, for example and without limitation, to maintenance and service 414.

Disclosed versions of the portable conduction welding apparatus 10 (see FIGS. 1, 2A-2B, 3A-3E), the portable conduction welding system 12 (see FIGS. 1, 7), and the method 250 (see FIG. 8) provide an improved portable conduction welding tool 10a (see FIGS. 1, 2A-2B) and an improved welding process 23 (see FIG. 1) for thermoplastic welding 20 (see FIG. 1), such as conduction welding 22 (see FIG. 1), of thermoplastic composite parts 24, such as thermoplastic composite aircraft parts 44 (see FIGS. 1, 12A, 13), where the portable conduction welding apparatus 10, such as the portable conduction welding tool 10a, is handheld, lightweight, and easy to carry, and is easily portable for transport to, and use at, multiple locations, including a manufacturing facility, and on an aircraft or on other vehicles. The portable conduction welding apparatus 10, such as the portable conduction welding tool 10a, is preferably under 35 (thirty-five) pounds in weight and is preferably under the one-man weight lift limit of under 35 (thirty-five) pounds.

In addition, the portable conduction welding apparatus 10, such as the portable conduction welding tool 10a, can be secured and transported in a carrying case 14 (see FIGS. 1, 7), such as a suitcase 14a (see FIG. 1, 7), a wheeled carrying case 14b (see FIG. 1), a briefcase 14c (see FIG. 1), a backpack 14d (see FIG. 1), a duffel bag 14e (see FIG. 1), or another suitable carrying case 14. The portable conduction welding apparatus 10, such as the portable conduction welding tool 10a, can be used to join thermoplastic composite parts 24 anywhere, including on an aircraft 300 (see FIG. 13).

Moreover, because the heater assemblies 48 (see FIGS. 2A-2B, 3A-3E) are not physically bolted to the clamp assembly 104 (see FIGS. 2A-2B, 3A-3E), the heater assemblies 48 may be easily swapped in and out for larger or smaller heater assemblies 48. The portable conduction welding apparatus 10 has the advantages of portability, usability, and adaptability over known apparatuses, systems, and methods.

Further, disclosed versions of the portable conduction welding apparatus 10 (see FIGS. 1, 2A-2B, 3A-3E), the portable conduction welding system 12 (see FIGS. 1, 7), and the method 250 (see FIG. 8) are usable on multiple thermoplastic composite part 24 configurations, are simple and easy to use and do not require complex digital controls and software programming or robotics to pre-plan the pathway of a robot or large equipment, and do not require special facility modifications, such as power or air supplies, to use. The portable conduction welding apparatus 10 is less complex to use and less expensive than known robotics and large equipment, such as jigs and large heated platens. The portable conduction welding apparatus 10, such as the portable conduction welding tool 10a, is able to function with standard power inputs, for example, 120 V (one-hundred twenty Volt) electrical power, and 758 kPa (110 psi, one-hundred ten pounds per square inch) shop air, such as pressurized or compressed air.

Novel features of the portable conduction welding apparatus 10, such as the portable conduction welding tool 10a, include combining the machined insulation blocks 56 (see FIGS. 2A-2B, 3A, 4B, 5A) that encase the machined heater blocks 58 (see 2A-2B, 3A, 4A, 5B), having the heater elements 74 (see FIGS. 2A-2B, 3A) for applying heat 30 (see FIG. 1) and having the thermocouples 96 (see FIGS. 2A-2B, 3A-3E) for monitoring a temperature 36 (see FIG. 1) of the heat 30 (see FIG. 1), with the clamp assembly 104 and the actuator assembly 130, such as the air cylinder actuator assembly 136 (see FIG. 3A) or the threaded screw rod actuator assembly 148 (see FIG. 3E), with the load cell 160 (see FIGS. 2A-2B, 3A) for monitoring pressure 32 (see FIG. 1) during a thermal welding cycle 75 (see FIG. 1), and with the indexing assembly 166 (see FIGS. 1, 3D) having the indexing pins 168 (see FIGS. 1, 3D) to index the upper heater assembly 52a (see FIGS. 2A-2B) and the lower heater assembly 50a (see FIGS. 2A-2B) to the upper clamp jaw assembly 120a (see FIGS. 2A-2B) and the lower clamp jaw assembly 118a (see FIGS. 2A-2B), respectively.

Many modifications and other versions of the disclosure will come to mind to one skilled in the art to which this disclosure pertains having the benefit of the teachings presented in the foregoing descriptions and the associated drawings. The versions described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

## Claims

1. A portable conduction welding apparatus (10) for conduction welding (22) of thermoplastic composite parts (24), the portable conduction welding apparatus (10) comprising:
a heating system (46) comprising:
a first heater assembly (50), and a second heater assembly (52) positioned opposite the first heater assembly (50), each of the first heater assembly (50) and the second heater assembly (52) comprising:
a machined insulation block (56);
a machined heater block (58) positioned within the machined insulation block (56);
one or more heater elements (74) coupled to the machined heater block (58), the one or more heater elements (74) configured to apply heat (30) during a thermal welding cycle (75); and
a thermocouple (96) coupled to the machined heater block (58), the thermocouple (96) configured to monitor a temperature (36) of the heat (30);
a force application and monitoring system (102) coupled to the heating system (46), the force application and monitoring system (102) comprising:
a clamp assembly (104) comprising:
a clamp device (105) having a first clamp jaw (108) pivotably coupled to a second clamp jaw (110), the first clamp jaw (108) coupled to a first clamp jaw assembly (118), and the second clamp jaw (110) coupled to a second clamp jaw assembly (120), and the first clamp jaw assembly (118) positioned opposite the second clamp jaw assembly (120); and
an actuator assembly (130) coupled to the clamp device (105), the actuator assembly (130) configured to move the clamp device (105) between an open position (132) and a closed position (134); and
a load cell (160) coupled to the clamp assembly (104), the load cell (160) configured to monitor a force (162) applied by the clamp assembly (104);
an indexing assembly (166) coupled to the clamp assembly (104), the indexing assembly (166) comprising a plurality of indexing pins (168) configured to index the first heater assembly (50) and the second heater assembly (52) to the clamp assembly (104); and
one or more controllers (85) having one or more power supplies (86), to control and to power the portable conduction welding apparatus (10),
wherein the portable conduction welding apparatus (10) is portable and is configured to weld together at a weldline (28a), a first thermoplastic composite part (24a) aligned to the first heater assembly (50) and a second thermoplastic composite part (24b) aligned to the second heater assembly (52), when the first heater assembly (50) and the second heater assembly (52) are indexed to the clamp assembly (104), and the clamp device (105) is in the closed position (134), by applying the force (162) from the clamp assembly (104) on the weldline (28a), and conducting the heat (30) from the one or more heater elements (74) at the weldline (28a) during the thermal welding cycle (75), to melt thermoplastic composite material (25) of the first thermoplastic composite part (24a) and the second thermoplastic composite part (24b) at the weldline (28a), to obtain welded thermoplastic composite parts (24c).

2. The portable conduction welding apparatus (10) of claim 1, wherein the machined insulation block (56) of each of the first heater assembly (50) and the second heater assembly (52) is made of a ceramic material (70), and further wherein the machined heater block (58) of each of the first heater assembly (50) and the second heater assembly (52) is made of a metal material (72) comprising one or more of, stainless steel (72a), steel (72b), aluminum (72c), carbon steel (72d), and aluminum bronze (72e).

3. The portable conduction welding apparatus (10) of claim 1 or 2, wherein each of the one or more heater elements (74) comprises a cartridge heater (76) having one or more heating wires (77) housed in a metal sheath (80) and attached to one or more lead wires (78), each cartridge heater (76) connected to one of the one or more controllers (85).

4. The portable conduction welding apparatus (10) of any of claims 1-3, wherein the first clamp jaw assembly (118) and the second clamp jaw assembly (120) each comprises:
an anvil jaw (122);
an anvil strap (124) attached to the anvil jaw (122);
a trap bar (126) having two or more trap bar holes (115c) configured to receive two or more of the plurality of indexing pins (168).

5. The portable conduction welding apparatus (10) of any of claims 1-4, wherein the actuator assembly (130) comprises an air cylinder actuator assembly (136) comprising:
an air cylinder assembly (138) coupled to the clamp device (105);
a valve assembly (140) having a quick disconnect coupling (142) configured to be attached to an air supply (144); and
an air tubing line (145) having a first end (146a) connected to the air cylinder assembly (138), and having a second end (146b) connected to the valve assembly (140).

6. The portable conduction welding apparatus (10) of any of claims 1-5, wherein the actuator assembly (130) comprises a threaded screw rod actuator assembly (148) comprising:
a threaded screw rod (150) having a first end (152a) coupled to the clamp device (105), and having a second end (152b) with a cylindrical collar (154) having a through opening (155); and
a handle (156) inserted through the through opening (155), and configured to rotate the threaded screw rod (150).

7. The portable conduction welding apparatus (10) of any of claims 1-6, wherein the load cell (160) is coupled to the second clamp jaw assembly (120) of the clamp assembly (104), and the second clamp jaw assembly (120) comprises a load bar (128) coupled to the load cell (160), and one or more centering bars (163) coupled to the load bar (128).

8. The portable conduction welding apparatus (10) of any of claims 1-7, wherein the plurality of indexing pins (168) comprise two first indexing pins (168a) and two second indexing pins (168b), and further wherein:
the first heater assembly (50) is indexed to the first clamp jaw assembly (118) with the two first indexing pins (168a); and
the second heater assembly (52) is indexed to the second clamp jaw assembly (120) with the two second indexing pins (168b).

9. The portable conduction welding apparatus (10) of any of claims 1-8, wherein the portable conduction welding apparatus (10) is coupled to a support apparatus (16), to enable the portable conduction welding apparatus (10) to be secured in an upright position (18) and/or
wherein the portable conduction welding apparatus (10) is a portable conduction welding tool (10a) designed to be secured and transported in a carrying case (14) that is handheld, the carrying case (14) comprising a suitcase (14a), a wheeled carrying case (14b), a briefcase (14c), a backpack (14d), or a duffel bag (14e).

10. A portable conduction welding system (12) for conduction welding (22) of thermoplastic composite parts (24), the portable conduction welding system (12) comprising:
a portable conduction welding apparatus (10) comprising:
a heating system (46) comprising:
a first heater assembly (50), and second heater assembly (52) positioned opposite the first heater assembly (50), each of the first heater assembly (50) and the second heater assembly (52) comprising:
a machined insulation block (56);
a machined heater block (58) positioned within the machined insulation block (56);
one or more cartridge heaters (76) coupled to the machined heater block (58), the one or more cartridge heaters (76) configured to apply heat (30) during a thermal welding cycle (75); and
a thermocouple (96) coupled to the machined heater block (58), the thermocouple (96) configured to monitor a temperature (36) of the heat (30);
a force application and monitoring system (102) coupled to the heating system (46), the force application and monitoring system (102) comprising:
a clamp assembly (104) comprising:
a clamp device (105) having a first clamp jaw (108) pivotably coupled to a second clamp jaw (110), the first clamp jaw (108) coupled to a first clamp jaw assembly (118), and the second clamp jaw (110) coupled to a second clamp jaw assembly (120), the first clamp jaw assembly (118) positioned opposite the second clamp jaw assembly (120); and
an actuator assembly (130) coupled to the clamp device (105), the actuator assembly (130) configured to move the clamp device (105) between an open position (132) and a closed position (134); and
a load cell (160) coupled to the clamp assembly (104), the load cell (160) configured to monitor a force (162) applied by the clamp assembly (104);
an indexing assembly (168) coupled to the clamp assembly (104), the indexing assembly (166) comprising a plurality of indexing pins (168) configured to index the first heater assembly (50) to the first clamp jaw assembly (118), and configured to index the second heater assembly (52) to the second clamp jaw assembly (120); and
one or more controllers (85) having one or more power supplies (86), to control and to power the portable conduction welding apparatus (10);
a support apparatus (16) configured for attachment to the portable conduction welding apparatus (10); and
a carrying case (14) configured to secure and to transport the portable conduction welding apparatus (10),
wherein the portable conduction welding apparatus (10) is portable and is configured to weld together at a weldline (28a), a first thermoplastic composite part (24a) aligned to the first heater assembly (50) and a second thermoplastic composite part (24b) aligned to the second heater assembly (52), when the first heater assembly (50) is indexed to the first clamp jaw assembly (118), the second heater assembly (52) is indexed to the second clamp jaw assembly (120), and the clamp device (105) is in the closed position (134), by applying the force (162) from the clamp assembly (104) on the weldline (28a), and conducting the heat (30) from the one or more cartridge heaters (76) of each of the first heater assembly (50) and the second heater assembly (52), at the weldline (28a), during the thermal welding cycle (75), to melt thermoplastic composite material (25) of the first thermoplastic composite part (24a) and the second thermoplastic composite part (24b) at the weldline (28a), to obtain welded thermoplastic composite parts (24c).

11. The portable conduction welding system (12) of claim 10, wherein the first clamp jaw assembly (118) and the second clamp jaw assembly (120) of the portable conducting welding apparatus (10) each comprises:
an anvil jaw (122);
an anvil strap (124) attached to the anvil jaw (122); and
a trap bar (126) having two or more trap bar holes (115c) configured to receive two or more of the plurality of indexing pins (168).

12. The portable conduction welding system (12) of claim 10 or 11, wherein the actuator assembly (130) of the portable conducting welding apparatus (10) comprises an air cylinder actuator assembly (136) comprising:
an air cylinder assembly (138) coupled to the clamp device (105);
a valve assembly (140) having a quick disconnect coupling (142) configured to be attached to an air supply (144); and
an air tubing line (145) having a first end (146a) connected to the air cylinder assembly (138), and having a second end (146b) connected to the valve assembly (140) and/or
wherein the actuator assembly (130) of the portable conducting welding apparatus (10) comprises a threaded screw rod actuator assembly (148) comprising:
a threaded screw rod (150) having a first end (152a) coupled to the clamp device (105), and having a second end (152b) with a cylindrical collar (154) having a through opening (155); and
a handle (156) inserted through the through opening (155), and configured to rotate the threaded screw rod (150).

13. A method (250) of using a portable conduction welding apparatus (10) for conduction welding (22) of thermoplastic composite parts (24), the method (250) comprising:
(252) providing the portable conduction welding apparatus (10) comprising:
a heating system (46) comprising:
a first heater assembly (50), and a second heater assembly (52) positioned opposite the first heater assembly (50), each of the first heater assembly (50) and the second heater assembly (52) comprising:
a machined insulation block (56);
a machined heater block (58) positioned within the machined insulation block (56);
one or more heater elements (74) coupled to the machined heater block (58); and
a thermocouple (96) coupled to the machined heater block (58), the thermocouple (96) configured to monitor a temperature (36) of heat (30) applied by the one or more heater elements (74);
a force application and monitoring system (102) coupled to the heating system (46), the force application and monitoring system (102) comprising:
a clamp assembly (104) comprising:
a clamp device (105) having a first clamp jaw (108) pivotably coupled to a second clamp jaw (110), the first clamp jaw (108) coupled to a first clamp jaw assembly (118), and the second clamp jaw (110) coupled to a second clamp jaw assembly (120), the first clamp jaw assembly (118) positioned opposite the second clamp jaw assembly (120); and
an actuator assembly (130) coupled to the clamp device (104); and
a load cell (160) coupled to the clamp assembly (104), the load cell (160) configured to monitor a force (162) applied by the clamp assembly (104);
an indexing assembly (166) coupled to the clamp assembly (104), the indexing assembly (166) comprising a plurality of indexing pins (168) comprising a plurality of first indexing pins (168a) and a plurality of second indexing pins (168b); and
one or more controllers (85) having one or more power supplies (86), to control and to power the portable conduction welding apparatus (10);
(254) aligning a first thermoplastic composite part (24a) to the first heater assembly (50);
(256) aligning a second thermoplastic composite part (24b) to the second heater assembly (52);
(258) indexing the first heater assembly (50) to the first clamp jaw assembly (118) with the plurality of first indexing pins (168a);
(260) indexing the second heater assembly (52) to the second clamp jaw assembly (120) with the plurality of second indexing pins (168b);
(262) moving the clamp device (105), with the actuator assembly (130), from an open position (132) to a closed position (134);
(264) applying the force (162), by the clamp assembly (104), on a weldline (28a) comprising contact interfaces (26) of the first thermoplastic composite part (24a) and the second thermoplastic composite part (24b);
(266) activating the one or more heater elements (74) of the first heater assembly (50), and activating the one or more heater elements (74) of the second heater assembly (52);
(268) running a thermal welding cycle (75), and applying heat (30) from the one or more heater elements (74) of the first heater assembly (50) and the one or more heater elements (74) of the second heater assembly (52), at the weldline (28a), to melt thermoplastic composite material (25) of the first thermoplastic composite part (24a) and the second thermoplastic composite part (24b) together at the weldline (28a), to obtain welded thermoplastic composite parts (24c);
(270) cooling the welded thermoplastic composite parts (24c); and
(272) removing the cooled welded thermoplastic composite parts (24c) from the portable conduction welding apparatus (10).

14. The method (250) of claim 13, further comprising, after removing (272) the cooled welded thermoplastic composite parts (24c) from the portable conduction welding apparatus (10), securing the portable conduction welding apparatus (10) within a carrying case (14), and transporting the portable conduction welding apparatus (10) within the carrying case (14) to another location (15) to perform the conduction welding (22) of other thermoplastic composite parts (24) and/or
wherein providing (252) the portable conduction welding apparatus (10) further comprises, coupling the portable conduction welding apparatus (10) to a support apparatus (16), to enable the portable welding apparatus (10) to be secured in an upright position (18) during the conduction welding (22) of the thermoplastic composite parts (24) and/or
wherein aligning (254) the first thermoplastic composite part (24a) to the first heater assembly (50), and aligning (256) the second thermoplastic composite part (24b) to the second heater assembly (52), further comprise, aligning the first thermoplastic composite part (24a) and aligning the second thermoplastic composite part (24b), each comprising one of, a thermoplastic composite laminate (38), a coupon (40), a workpiece (42), a thermoplastic composite aircraft part (44), an aircraft passenger door surround part (44a), a bracket (44b), a clip (44c), a fitting (44d), panel (44e), a frame (44f), an intercostal (44g), or a floor beam (44h).

15. The method (250) of claims 13 or 14, wherein moving (262) the clamp device (105), with the actuator assembly (130), further comprises, moving the clamp device (105), with the actuator assembly (130) comprising one of:
an air cylinder actuator assembly (136) comprising:
an air cylinder assembly (138) coupled to the clamp device (105);
a valve assembly (140) having a quick disconnect coupling (142) configured to be attached to an air supply (144); and
an air tubing line (145) having a first end (146a) connected to the air cylinder assembly (138), and having a second end (146b) connected to the valve assembly (140); or
a threaded screw rod actuator assembly (148) comprising:
a threaded screw rod (150) having a first end (152a) coupled to the clamp device (105), and having a second end (152b) with a cylindrical collar (154) having a through opening (155); and
a handle (156) inserted through the through opening (155), and configured to rotate the threaded screw rod (150), and/or
wherein running (268) the thermal welding cycle (75) and applying the heat (30) further comprises, running the thermal welding cycle (75) and applying the heat (30) at the weldline (28a) at the temperature (36) in a range of from 260 degrees Celsius to 375 degrees Celsius, and applying the force (162) by the clamp assembly (104) on the weldline (28a) at a pressure (32) in a range of from 69 kPa (10 psi, pounds per square inch) to 414 kPa (60 psi).
